(19) Europäisches Patentamt
European Patent Office
Office européen des brevets

(11) Veröffentlichungsnummer : **0 299 328 B1**

(12) # EUROPÄISCHE PATENTSCHRIFT

(45) Veröffentlichungstag der Patentschrift : **10.07.91 Patentblatt 91/28**

(51) Int. Cl.$^5$ : **C09B 62/002,** C09B 19/02, D06P 1/38, D06P 1/40

(21) Anmeldenummer : **88110687.6**

(22) Anmeldetag : **05.07.88**

(54) **Reaktivfarbstoffe.**

(30) Priorität : **16.07.87 DE 3723459**

(43) Veröffentlichungstag der Anmeldung : **18.01.89 Patentblatt 89/03**

(45) Bekanntmachung des Hinweises auf die Patenterteilung : **10.07.91 Patentblatt 91/28**

(84) Benannte Vertragsstaaten : **CH DE FR GB LI**

(56) Entgegenhaltungen :
**EP-A- 0 134 033**
**EP-A- 0 158 857**

(73) Patentinhaber : **BAYER AG**
**W-5090 Leverkusen 1 Bayerwerk (DE)**

(72) Erfinder : **Harms, Wolfgang, Dr.**
**Osenauer Strasse 46**
**W-5068 Odenthal (DE)**
Erfinder : **Herd, Karl Josef, Dr.**
**Am Gartenfeld 66**
**W-5068 Odenthal-Holz (DE)**

**EP 0 299 328 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Farbstoffe der Formel

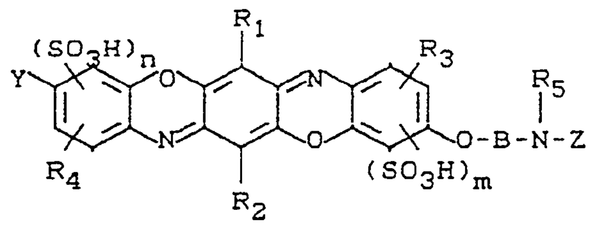

(I)

worin

$R_1$, $R_2$ = Wasserstoff, Cl, Br, gegebenenfalls substituiertes $C_1$-$C_4$-Alkyl oder $C_1$-$C_4$-Alkoxy, Carboxy, Alkoxycarbonyl, Aryloxy wie gegebenenfalls substituiertes Phenoxy, gegebenenfalls substituiertes Carbonamid sowie Acylamino wie gegebenenfalls substituiertes $C_1$-$C_4$-Alkylcarbonylamino oder gegebenenfalls substituiertes Phenylcarbonylamino.

Als gegebenenfalls substituiertes Carbonamid kommt vor allem $CONH_2$ oder mono- oder di-$C_1$-$C_4$-Alkylcarbonamid in Frage.

$R_3$, $R_4$ = Wasserstoff, gegebenenfalls substituiertes $C_1$-$C_4$-Alkyl oder $C_1$-$C_4$-Alkoxy, Carboxy sowie Cl und Br.

$R_5$ = Wasserstoff, gegebenenfalls substituiertes $C_1$-$C_4$-Alkyl, gegebenenfalls substituiertes Aralkyl, gegebenenfalls substituiertes Aryl, insbesondere gegebenenfalls substituiertes Phenyl.

Als Substituenten für die oben genannten Alkyl- und Phenylreste kommen insbesondere in Frage : $SO_3H$, $OSO_3H$, OH, COOH, $CONH_2$, CN, $S_2O_3H$, $OPO_3H_2$, $PO_3H_2$, Halogen.

Y = Wasserstoff, Halogen, insbesondere Cl, Br, Sulfo, Amino, $C_1$-$C_6$-Alkoxy, $C_1$-$C_6$-Alkyl, $C_1$-$C_6$-Alkoylamino, $C_1$-$C_6$-Alkylamino, Arylamino, insbesondere Phenylamino, Aryl, insbesondere Phenyl, Aroylamino, insbesondere Phenylcarbonylamino, Aralkyl, insbesondere Phenyl-$C_1$-$C_4$-alkyl, Aryloxy, insbesondere Phenoxy, wobei Y nicht

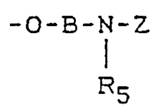

bedeutet,

wobei die genannten Reste noch weiter substituiert sein können, insbesondere durch : $SO_3H$, $OSO_3H$, OH, COOH, CN, $CONH_2$, CO-NH-Alkyl, CO-N(Alkyl)$_2$, $S_2O_3H$, $OPO_3H_2$, $PO_3H_2$, O-CO-$C_1$-$C_4$-Alkyl, Halogen, $SO_2NH_2$, $SO_2$-NH-($C_1$-$C_4$)-Alkyl, $SO_2$-N($C_1$-$C_4$-Alkyl)$_2$, $SO_2$-$C_1$-$C_4$-Alkyl,

worin die genannten Alkylreste wiederum weiter substituiert sein können.

Bevorzugte Reste Y sind die genannten Alkoxy-, Aryloxy, Alkyl- und Halogenreste.

B = Brückenglied, insbesondere aliphatischer Rest, insbesondere mit 2-6 C-Atomen, die gegebenenfalls durch Heteroatome wie O, NH, S, N-$C_1$-$C_4$-Alkyl unterbrochen oder die gegebenenfalls substituiert sind, beispielsweise durch OH, $OSO_3H$ weiterhin araliphatisches oder aromatisches, insbesondere gegebenenfalls substituiertes Phenyl-$C_1$-$C_4$-Alkylen oder Arylen, insbesondere gegebenenfalls substituiertes Phenylen, wobei als Substituenten insbesondere Sulfo, $C_1$-$C_4$-Alkyl, Cl in Frage kommen.

Z = H oder faserreaktiver Rest

m = 0 oder 1

n = 0 oder 1.

Aus der EP-A 13 40 33 sind Benzthiazinophenoxazin-Farbstoffe bekannt, die von einem anderen Heterocyclus ausgehen als gemäß vorliegender Erfindung.

Geeignete aliphatische Brückenglieder sind beispielsweise :
$C_2$-$C_6$-Alkylen wie Ethylen, 1,3- und 1,2-Propylen, 1- und 2-Phenylpropylen, 2-Hydroxypropylen, 1,4-, 1,3-, 2,3-Butylen, 1,5-Pentylen, 1,6- und 2,5-Hexylen, $-(CH_2-CH_2-O)_n-CH_2-CH_2-$ mit n = 1-3, $-CH_2-CH_2-S-CH_2-CH_2-$, $-CH_2-CH_2-NH-CH_2-CH_2-$,

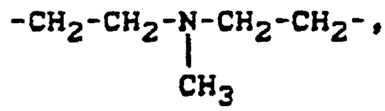

Geeignete Arylenreste sind beispielsweise :
1,2-, 1,3- und 1,4-Phenylen, 4-Sulfo-1,3-phenylen, 6-Sulfo-1,3-phenylen, 2- oder 3-Sulfo-1,4-phenylen, 4,6-Disulfo-1,3-phenylen, 3-Methyl-1,4-phenylen, 2-Methyl-1,4-phenylen, 4-Methyl-1,3-phenylen, 6-Methyl-1,3-phenylen, 5-Methyl-1,2-phenylen, 3-Chor-1,4-phenylen, 4-Chlor-1,3-phenylen, 4-Chlor-1,2-phenylen sowie die entsprechenden durch Sulfosäuregruppen substituierten Methyl- und Chlorphenylenreste.

Geeignete faserreaktive Reste, d.h. solche die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-, und Phenanthridin-Ring-System.

Unter den reaktiven Substituenten am Heterocyclus sind beispielsweise zu erwähnen Halogen (Cl, Br oder F), Ammonium einschließlich Hydrazinium, Sulfonium, Sulfonyl, Azido-($N_3$), Rhodanido, Thio, Thiolether, Oxiether, Sulfinsäure und Sulfonsäure.

Im einzelnen sind beispielsweise zu nennen :
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt :
2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-4-fluor-triazinyl-6, 2-(3′,6′,8′-Trisulfonaphthyl-(2′))-4-fluor-triazinyl-6, 2-(3′,6′-Disulfonaphthyl-(1′))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6,2-(o-, m- oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)-mercapto-4-fluortriazinyl, 2-(2′,4′-Dinitrophenyl)-mercapto-4-fluor-triazinyl-6, 2-Methyl-4-fluor-triazinyl-6, 2-Phenyl-4-fluor-triazinyl-6 so wie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin oder Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder Halogendiazinylrest verknüpft sein. Beispiele für derartige Reste sind die folgenden :

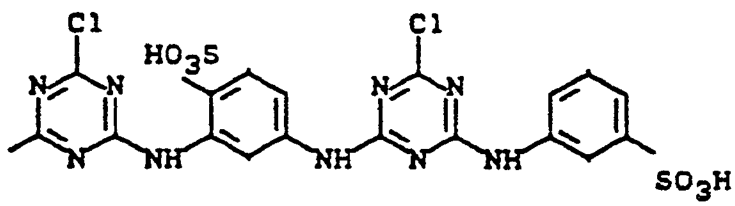

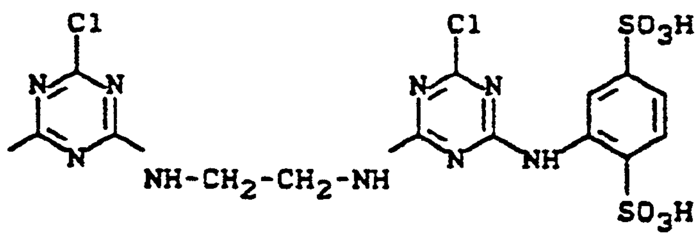

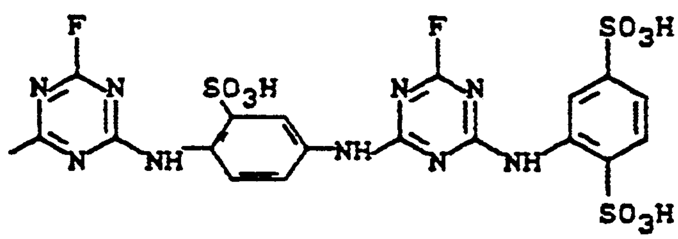

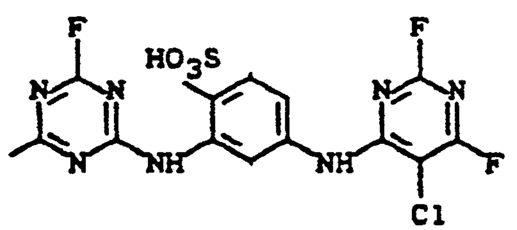

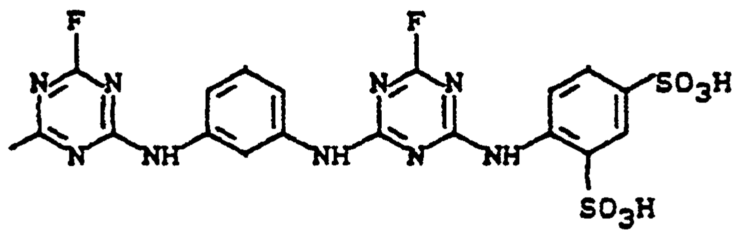

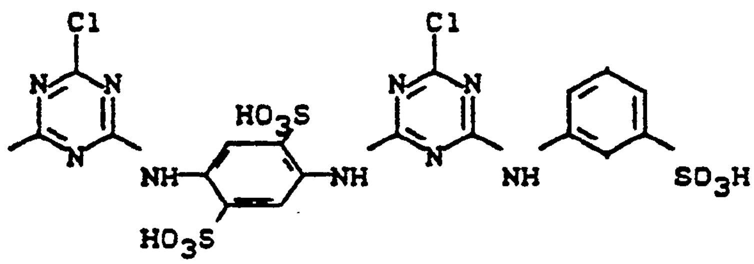

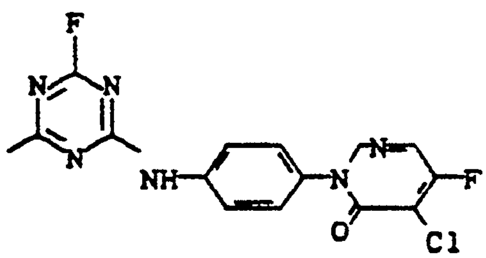

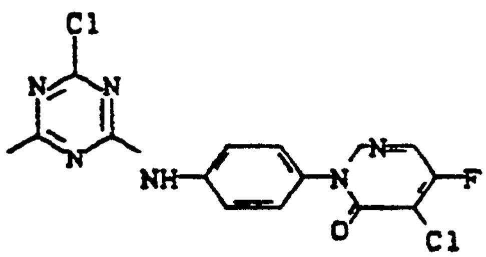

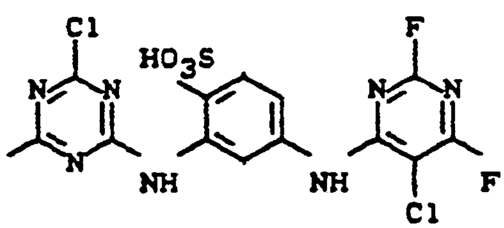

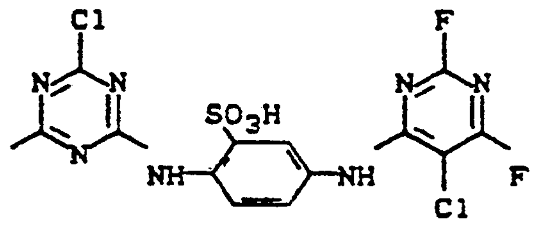

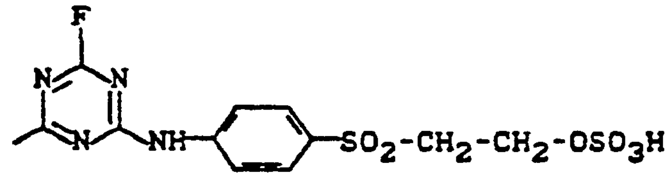

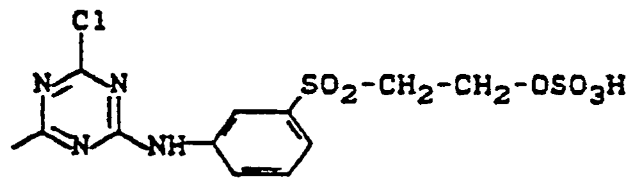

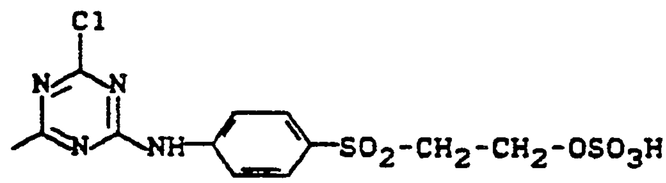

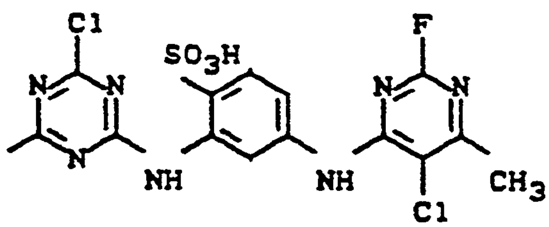

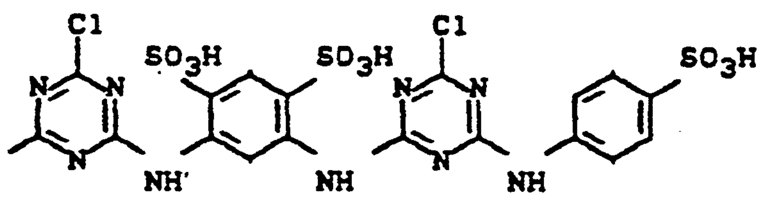

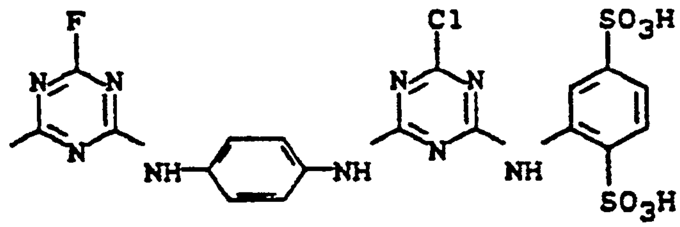

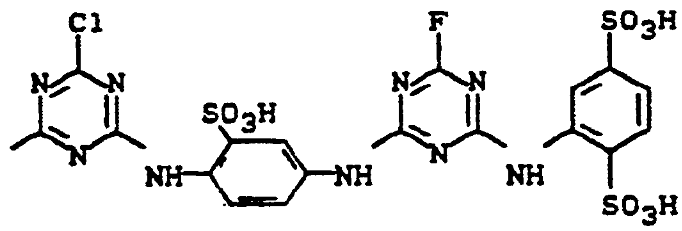

Weiter können die Halogentriazinylreste auch mit einem zur Bildung eines Vinylsulfonrestes befähigten Aminrest verknüpft sein, wie zum Beispiel 2-(2'-, 3'- oder 4'-(β-Sulfatoethylsulfonyl)-phenylamino-4-fluor-triazinyl-6, 2-(2'-, 3'-, 4'-(β-Thiosulfatoethylsulfonyl)-phenylamino)-4-fluor-triazinyl-6, 2-(2'-, 3'-, 4'-(β-Phosphatoethyl-sulfonyl)-phenylamino)-4-fluor-triazinyl-6, 2-(2'-, 3'-, 4'-β-Acetoxy-ethylsulfonyl)-phenylamino)-4-fluor-triazinyl-6, 2-(2'-, 3'-, 4'-(β-Chlorethylsulfonyl)-phenylamino)-4-fluor-triazinyl-6, 2-(2'-, 3'-, 4'-Vinylsulfonyl-phenylamino)-4-fluor-triazinyl-6, 2-(2-(β-Sulfatoethylsulfonyl)-ethylamino)-4-fluor-triazinyl-6 sowie die entsprechenden 2-Substituierten-4-chlor-triazinyl-6-reste.

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4,-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl ; 2-Methyl-4-fluor-5-methylsulfonyl-pyrimidinyl-6 ; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6 ; sulfonylgruppenhaltige Pyrimidinringe, wie 2-Carboxymethyl-

sulfonyl-pyrimidinyl-4-, 2-Methylsulfonyl- 6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methyl-sulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Trismethylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl-oder -carbonyl- ; 2-Chlorbenzthiazol-5- oder -6-carbonyl-oder -5- oder -6-sulfonyl-, 2-Arylsulfonyl- oder Alkylsulfonyl-benzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5-oder -6-carbonyl- oder -sulfonyl-, 2-Chlorbenzimidazol-5-oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-2)-aryloxy-, α- oder β-Bromacryloyl-, α- oder β-Alkyl- oder Arylsulfoacryloyl-Gruppe, wie α- oder β-Methylsulfonylacryloyl, Chloracetyl, Vinylsulfonyl, $-SO_2-CH_2-CH_2Z$ worin Z = alkalisch abspaltbare Gruppe, insbesondere $-OSO_3H$, $-OCOCH_3$, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$,

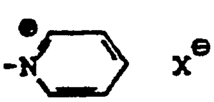

oder

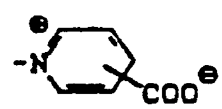

mit

X = Anion, bspw. $-OSO_3H$, $-OPO_3H_2$, $-Cl$, $-Br$, $-F$, $-SCN$, $-OCN$, $-OSO_3CH_3$, $-OSO_2C_6H_5$, $OOC-CH_3$.

Bevorzugt unter den Farbstoffen der Formel (I) sind solche der Formel

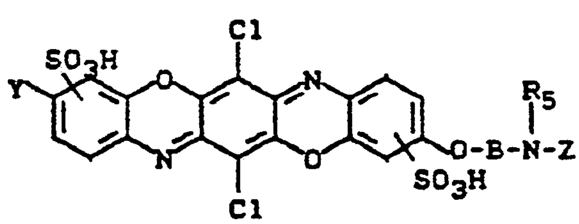

(II)

Weiterhin bevorzugte Farbstoffe sind solche der Formel

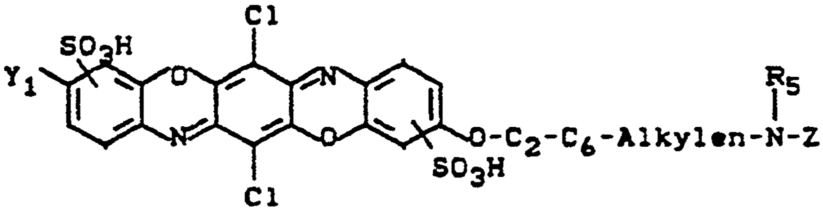

(III)

worin

$Y_1$ = gegebenenfalls substituiertes $C_1$-$C_3$-Alkoxy, $C_1$-$C_2$-Alkyl, Phenoxy oder Cl oder Br,

insbesondere solche der Formel

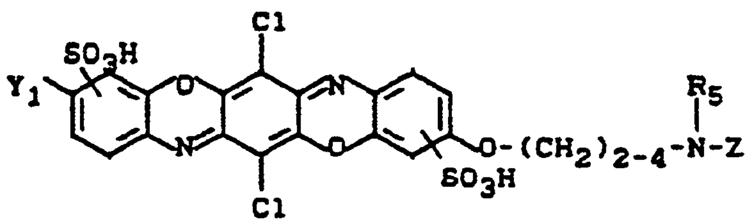

(IV)

weiterhin solche der Formel

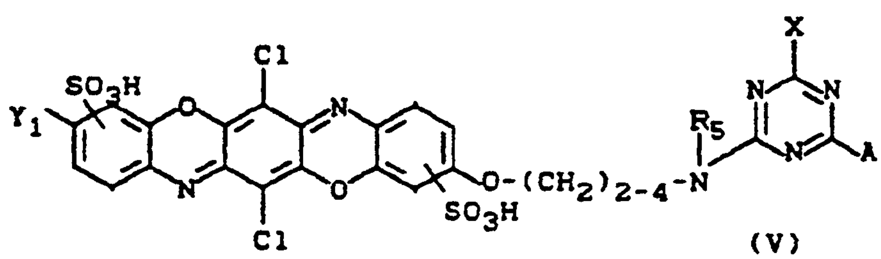

(V)

worin

X = F, Cl und
A = Rest eines Aminobenzols oder Aminonaphthalins, sowie solche der Formel

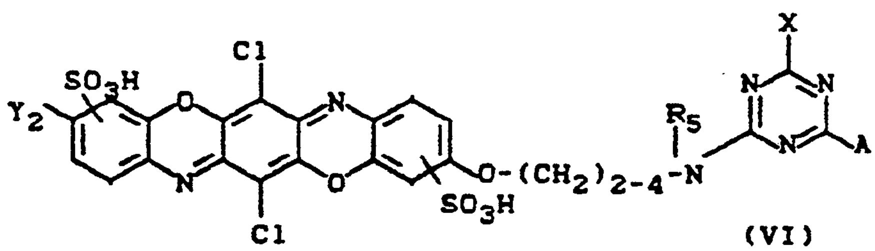

(VI)

worin

$Y_2$ = $CH_3O$, $C_2H_5O$, $HO_3SO-CH_2-CH_2-O$, 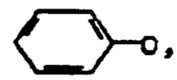,

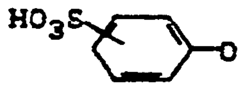, $CH_3$, Cl.

Geeignete Reste A sind insbesondere solche der Formel

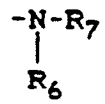

worin

$R_6$ = H, gegebenenfalls substituiertes $C_1$-$C_4$-alkyl,
$R_7$ = gegebenenfalls substituiertes Phenyl oder Naphthyl, insbesondere gegebenenfalls durch $SO_3H$, $C_1$-$C_4$-ALkyl, $C_1$-$C_4$-Alkoxy oder Cl substituiertes Phenyl.

Die Herstellung der Farbstoffe (I) mit Z = faserreaktiver Rest erfolgt beispielsweise durch Reaktion der entsprechenden Farbstoffe (VII)

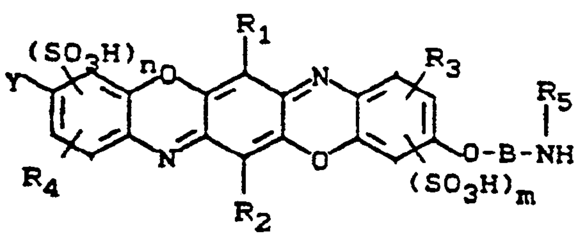

(VII)

mit einer Reaktivkomponente

Z-Hal (VIII)

worin

Hal = F, Cl oder Br.

Geeignete Reaktivkomponenten (VIII) sind dabei insbesondere die den oben angegebenen Resten zugrunde liegenden Halogenverbindungen.

Die Kondensation wird entweder in wäßrigem oder wäßrig organischem Medium in Abhängigkeit von der eingesetzten Reaktivkomponente bei Temperaturen von 0-80°C und pH-Werten von 5-11 in Gegenwart alkalischer Kondensationsmittel wie wäßriger Alkalihydrogencarbonat-, Alkalicarbonat- oder Trialkaliphosphat-Lösung durchgeführt oder in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0-80°C vollzogen.

Die Herstellung von Verbindungen der Formel (VII) kann erfolgen nach an sich bekannten Methoden durch Kondensation von 1,4-Benzochinonen der Formel

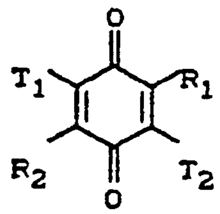

(IX)

worin

$T_1$, $T_2$ Wasserstoff, Cl, Br, O-Alkyl oder O-Aryl bedeuten,

mit molaren Mengen von Aminen der Formeln

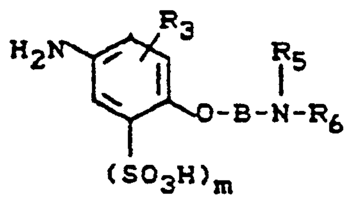

(X)

und

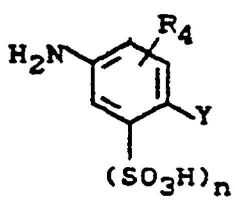

(XI)

worin

$R_6$ = H, Alkylcarbonyl oder Phenylcarbonyl
m, n = 0 oder 1

oder worin

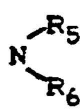 den Rest 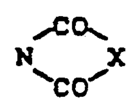

mit

X = $C_2$-$C_4$-Alkylen oder 1,2-Phenylen bedeutet,

zu Verbindungen der Formel

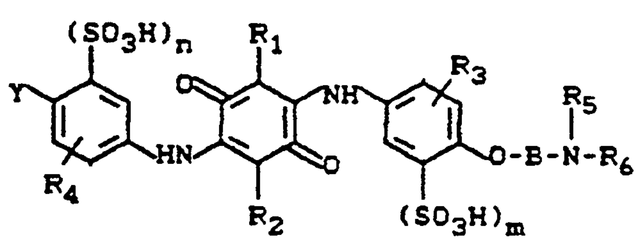

(XII)

und nachfolgenden Ringschluß der Dianilide (XII) zu den Triphendioxazin-Verbindungen der Formel (VII). Auch im Zuge dieser letzten Operation können gegebenenfalls Sulfonsäuregruppen eingeführt werden. Weiterhin kann zusätzlich gegebenenfalls, wenn nicht vorher erfolgt, eine Umwandlung der

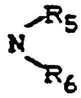 -Funktion in 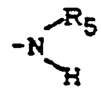 oder

$-NH_2$ durch Verseifung vorgenommen werden.

Je nach den beim Ringschluß angewandten Reaktionsbedingungen können die Sulfonsäuregruppen in den Benzringen der Dioxazine (VII) entweder in den o- oder in den p-Stellungen zu den Ringsauerstoffatomen des Dioxazin-Systems auftreten.

Die Kondensation der Benzochinone der Formel (IX) mit den Aminen (X) und (XI) erfolgt am besten in wäßrigem oder wäßrig-organischem Medium unter Zugabe alkalischer Kondensationsmittel bei pH-Werten von 3-11, vorzugsweise 4-8, und Temperaturen von 20-90°C, vorzugsweise 40-70°C – oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (XII) als schwerlösliche, braune Produkte aus.

Eine Variante zur Herstellung Verbindungen der Formel (XII) besteht in der Addition von Aminen (X) und (XI) an 1,4-Benzochinone der Formel

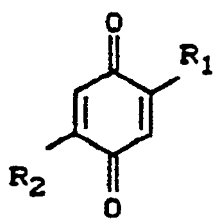

(XIII)

worin

$R_1$ und $R_2$ die oben angegebene Bedeutung haben, und Oxydation der primär entstehenden Addukte.

Der Ringschluß der Chinonkondensationsprodukte (XII) zu den Dioxazinen (VII) kann nach an sich bekannten Methoden, wie sie in den Deutschen Offenlegungsschriften 2 122 262, 2 124 080, 2 302 383, 2 344 781, 2 503 611, 2 823 828 und in der Britischen Patentschrift 2 019 872 beschrieben sind, insbesondere in konzentrierter Schwefelsäure und vor allem in Oleum mit $SO_3$-Gehalten von 1-50% bei Temperaturen von 10-80°C gegebenenfalls mit Zusatz von Oxidationsmitteln wie Kalium- oder Ammoniumperoxidisulfat, Braunstein oder organischen Peroxiden vorgenommen werden.

Amine (XI) sind in großer Zahl beschrieben.

Amine (X) mit B = Alkylen, vorzugsweise $C_2$-$C_6$-Alkylen lassen sich beispielsweise folgendermaßen herstellen :

Nitroverbindungen der Formeln

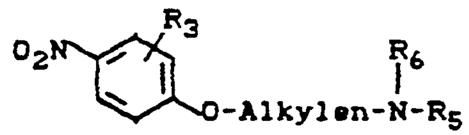

(Xa)

oder

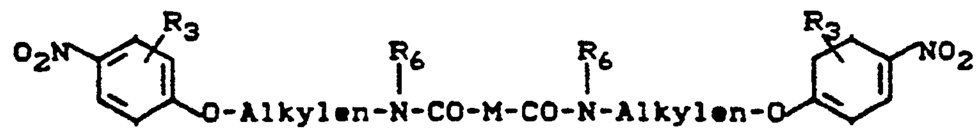

(Xb)

mit

M = direkte Bindung, $C_2$-$C_4$-Alkylen oder 1,3- bzw. 1,4-Phenylen

werden in bekannter Weise zu den entsprechenden Aminen reduziert und anschließend gegebenenfalls sulfoniert (in O-Stellung zum -o-Substituenten) und die Acylaminogruppe verseift.

Alternativ kann die Einführung von Sulfogruppen auch auf der Stufe der Verbindungen (VI) bzw. der Stufe (X) erfolgen, ebenso die Verseifung.

Die Herstellung der Verbindungen (Xa) kann beispielsweise folgendermaßen erfolgen :

1. 4-Nitrochlorbenzol wird mit 2-Amino- bzw. 2-Alkylaminoethanol in Dimethylsulfoxid/Natriumhydrid bei etwa 40°C umgesetzt (vgl. Knipe et al. Journal of the Chemical Soc., Perkin trans I 1977, 581-583 ; Synthesis 1976, 606-607).
2. Umsetzung von ω-(4-Nitrophenoxy)-alkanolen mit Toluolsulfochorid zu den entsprechenden Estern, Austausch des Toluolsulfonatrestes gegen den Phthalimidrest mit Phthalimidkalium und folgende saure Verseifung (vgl. J. of Organic Chemisry, 1985, 4449-4504).
3. Umsetzung von ω-(4-Nitrophenoxy)-alkylbromiden mit Phthalimidkalium bzw. 4-Nitrophenol mit ω-Phthalimido-alkylbromiden und folgende Abspaltung des Phthalimidrestes mit Hydrazin (vgl. Britische Patentschrift 769 706 und Journal of the Chemical Society (London) 1959, 3886) bzw. Umsetzung von ω-(4-Nitrophenoxy)-alkylbromiden mit Hexamethylentetramin und folgende saure hydrolytische Spaltung des quartären Salzes (vgl. Journal of Medicinal Chemistry, 12, 214-216 (1969)).

Ein wesentlich einfacheres Verfahren zur Herstellung der Verbindungen (Xa) bzw. (Xb) mit B = Alkylen, verläuft folgendermaßen.

Nitrohalogenbenzole der Formel

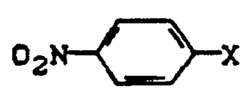

(Xc)

mit

X = F, Cl, Br

werden mit Acylaminoalkanolen der Formel

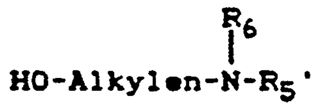

(Xd)

bzw.

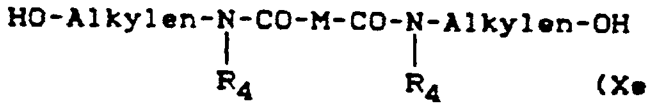

(Xe)

worin

R[5'] = Alkylcarbonyl oder Arylcarbonyl und worin

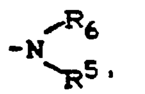 auch für 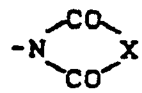 mit

X = $C_2$-$C_4$-Alkylen bzw. 1,2-Phenylen stehen kann, in Gegenwart starker Basen wie Alkylihydroxid oder organischen Basen und gegebenenfalls üblichen Phasentransferkatalysatoren bei Temperaturen von etwa 20 bis 100° umgesetzt.

Als Reaktionsmedium kommen vorzugsweise dipolare aprotische Lösungsmittel (in Kombination mit festem Alkalihydroxid bzw. organischen Basen) oder mit Wasser nicht mischbare organische Lösungsmittel (in Kombination mit wäßrigem Alkalihydroxid und Transferkatalystoren) zur Anwendung.

Geeignete dipolare aprotische Lösungsmittel sind beispielsweise Acetonitril, Dimethylsulfoxid, Tetramethylensufon, Säureamide wie Dimethylformamid, Dimethylacetamid, N-Methylpyrrolidon.

Geeignete organische Lösungsmittel sind beispielsweise Aromaten wie Toluol, Xylole, Benzol, Chlorbenzole, Nitrobenzol, Anisol, Dimethylanilin, aliphatische Chlorkohlenwasserstoffe.

Geeignete organische Basen sind beispielsweise Trialkylamine wie Trimethylamin, Tributylamin, N,N-Dimethylcyclohexylamin, N-Alkylmorpholine, Diazabicyclooctan.

Geeignete Transferkatalysatoren sind beispielsweise Tetraalkylammoniumsalze wie Tetra-butylammoniumchlorid, oder -bromid, Methyl-tri-octylammoniumchlorid, Benzyl-triethylammoniumchlorid oder -bromid, Benzyl-dodecyl-dimethylammoniumchlorid, Methyl-oder Ethyl-tri-butylammoniumbromid, Tetra-n-hexylammoniumbromid, n-Hexadecyl-trimethylammoniumbromid.

Geeignete Acylaminoalkanole der Formeln (Xd) und (Xe) sind beispielsweise folgende :
N-(2-Hydroxyethyl)-formamid, -acetamid, -propionamid, -benzamid, -4-chlorbenzamid oder -phthalimid, N-(3-Hydroxy- oder 2-hydroxypropyl)-formamid, -acetamid, propionamid, -butyramid, -benzamid oder -phthalimid N-(4-, 3- oder 2-Hydroxybutyl)-acetamid oder -benzamid, N-(5-hydroxypentyl)-acetamid oder -benzamid, N-(6-Hydroxyhexyl)-formamid, -acetamid, -propionamid, -benzamid oder -phthalimid, N-Methyl-N-(2-hydroxyethyl)-acetamid, -propionamid oder -benzamid, N-Ethyl-N-(2-hydroxyethyl)- acetamid oder -benzamid, N,N-Bis-(2-hydroxyethyl)-acetamid oder -benzamid, N-Phenyl-N-(2-hydroxyethyl)-acetamid oder -benzamid, N-(1-Hydroxy-2-propyl)-benzamid, N-Cyclohexyl-N-(2-hydroxyethyl)-acetamid, N-Ethyl-N-(3-hyroxypropyl)-formamid oder -acetamid, N-(2-Hydroxy-1,1-dimethylethyl)-acetamid oder -benzamid, N-(2-Hydroxy-1,2-dimethylethyl)-acetamid oder -benzamid, N,N'-Bis-(2-hydroxyethyl- oder 2- oder 3-hydroxypropyl- oder 2-, 3- oder 4-hydroxybutyl- oder 5-hydroxypentyl- oder 6-hydroxyhexyl)-oxalsäurediamid, -malonsäurediamid oder -bernsteinsäurediamid oder -terephthalsäurediamid oder -isophthalsäurediamid, N-(2-Hydroxyethyl-, 2- oder 3-Hydroxypropyl, 2-, 3- oder 4-Hydroxybutyl)-methylurethan, -ethylurethan oder -phenylurethan, N,N-Bis-(2-hydroxyethyl)-harnstoff, N,N'-Bis-(2- oder 3-hydroxypropyl)-harnstoff, N-(2- oder 3-Hydroxypropyl)-chloracetamid, N-(2-Hydroxyethyl)-acrylamid, N-(2-Hydroxyethyl-methacrylamid.

Die erfindungsgemäß hergestellten Verbindungen (Xa) und (Xb) werden anschließend zu den Aminen reduziert, und anschließend in beliebiger Reihenfolge sulfoniert und die Acylaminogruppe verseift zu den Verbindungen der Formel

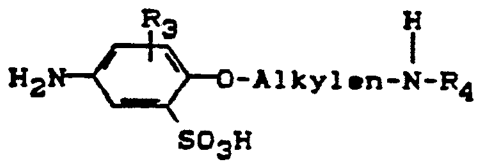 (Xf)

Verbindungen der Formel (X) mit B = Arylen sind nach üblichen Methoden z.B. aus Nitrohalogenbenzolen oder Nitrohalogenbenzolsulfonsäuren und Acylaminophenolen bzw. Acylaminophenolaten und nachfolgende Reduktion der Nitrogruppen zugänglich. Gegebenenfalls können durch Sulfonierung Sulfonsäuregruppen oder weitere Sulfonsäuregruppen eingeführt werden.

Beispielhaft seien die folgenden genannt :

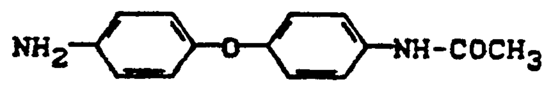

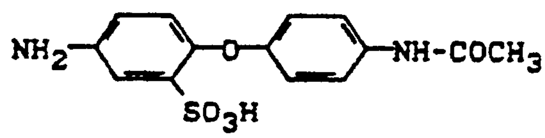

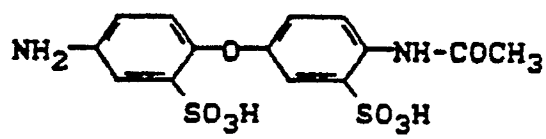

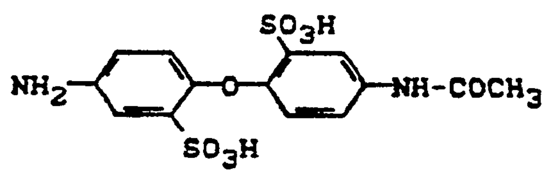

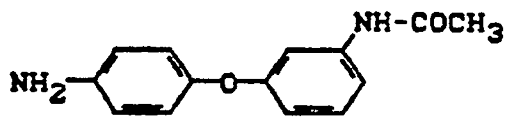

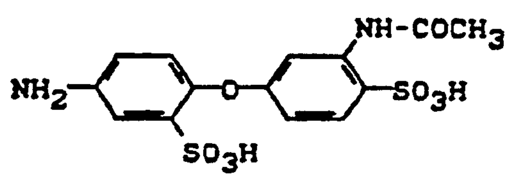

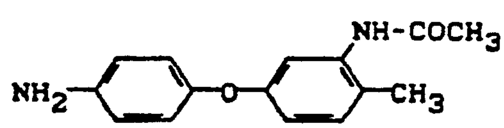

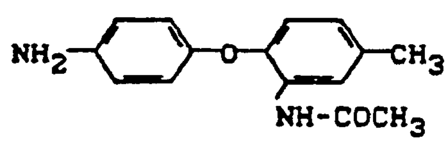

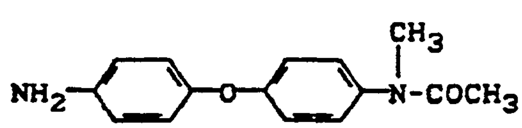

Bei Verwendung sulfogruppenfreier Amine (X) oder (XI) werden Sulfogruppen gegebenenfalls beim Ringschluß im Oleum oder Monohydrat zum Triphendioxazin eingeführt. Sind aliphatische Hydroxygruppen vorhanden, so können diese sulfatiert werden.

Beim Umsatz von äquimolaren Mengen der Benzochinone (IX) und der Arylaminoverbindungen (X) und (XI) entstehen die unsymmetrischen Verbindungen der Formel (XII) nicht in reiner Form, sondern sind stets begleitet von den symmetrischen Nebenprodukten, so daß im Zuge der anschließenden Oxydation und gegebenenfalls der Kondensation mit den Reaktivkomponenten (VIII) auch die symmetrischen Triphendioxazine der Formeln

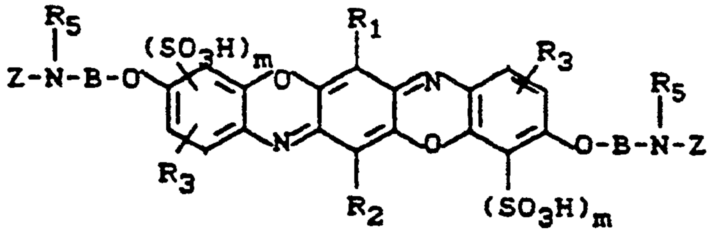

(XIV)

und

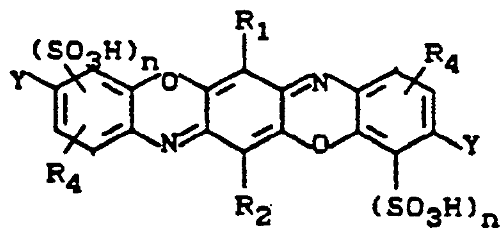

(XV)

worin
$R_1$-$R_5$, m, n, B, Z und Y die oben angegebene Bedeutung haben
in geringerer Menge entstehen.

Diese Nebenbestandteile beeinflussen jedoch die färberischen Eigenschaften der erfindungsgemäßen Farbstoffe der Formel (I) nicht nachteilig. Die Verbindungen der Formel (XIV) werden als faserreaktive Farbstoffe ebenso wie die der Formel (I) auf der Faser fixiert und ihre Färbungen weisen ein weitgehend ähnliches Eigenschaftsbild auf. Die nicht reaktiven Verbindungen der Formel (XV) werden nach Aufziehen auf die Faser bei der dem Färbprozeß folgenden Nachbehandlung durch Waschen leicht wieder von der Faser entfernt.

Andererseits kann man bei der Kondensation der Chinone (IX) durch Variation des Mengenverhältnisses der Aminoverbindungen (X) und (XI) das Verhältnis der im Farbstoffgemisch auftretenden Farbstoffe der allgemeinen Formeln (I) und (XIV) variieren und damit auch spezielle anwendungstechnische Eigenschaften des Farbstoffgemisches wie Fixierausbeute, Egalisiervermögen, Aufbauvermögen und Löslichkeit vorteilhaft beeinflussen.

Gegenstand der Erfindung sind deshalb auch technisch vorteilhafte Farbstoffgemische, bestehend aus oder enthaltend Verbindungen der Formel (I), (XIV) und (XV) beispielsweise im Molprozentverhältnis (19-50): (80-25) : (1-25), bevorzugt (30-50) : (4-25) : (66-25).

Derartige Gemische erhält man insbesondere durch Umsetzung von (IX) und (X) und (XI) im Molverhältnis 1 : 1,1 : 0,9 bis 1 : 1,9 : 0,1 bevorzugt 1 : 1,1 : 0,9 bis 1 : 1,7 : 0,7 und weitere Reaktion wie oben beschrieben. Mit steigenden Anteil (X) muß auch der Anteil an Reaktivkomponente (VIII) proportional erhöht werden. Mit steigenden Anteil an (X) erniedrigt sich der Anteil an (XV) im Gemisch.

Technisch vorteilhafte Farbstoffgemische können auch durch Zumischen von Farbstoffen der Formel (XIV) zu den oben beschriebenen, erfindungsgemäß hergestellten Farbstoffgemischen entstehen, indem man das Mischungsverhältnis so wählt, daß die Farbstoffanteile der Formeln (I) und (XIV) im Molverhältnis von 80 : 20 bis 10 : 90, bevorzugt jedoch im Verhältnis von 70 : 30 bis 20 : 80 vorliegen.

Die neuen Farbstoffe und Farbstoffgemische sind wertvolle Produkte, die sich durch hohe Farbstärken auszeichnen. Sie eignen sich in dispergierter oder gelöster Form für die verschiedensten Anwendungszwecke.

Als wasserlösliche Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Als wasserlösliche Reaktivfarbstoffe werden die genannten Materialien nach den für Reaktivfarbstoffe allgemein üblichen Verfahren gefärbt oder bedruckt. Man erhält dann licht- und naßechte rote Färbungen und Drucke.

Bei Temperaturangaben in den Beispielen handelt es sich um °C. Die Formeln der wasserlöslichen Farbstoffe in der Beschreibung und in den Beispielen sind die der freien Säuren. Die Farbstoffe werden in der Regel in Form ihrer Alkalisalze, insbesondere der Lithium-, Natrium- oder Kaliumsalze, isoliert und angewandt.

Beispiel 1

26,9 g 2-(4-Amino-2-sulfophenoxy)-ethylamin-hydrochlorid (0,1 Mole), 20,3 g 5-Amino-2-methoxybenzolsulfonsäure (0,1 Mole) werden in 370 ml Wasser durch Zugabe von etwa 105 ml 2n Natronlauge bis zum pH 6 gelöst. Man versetzt die Lösung mit 55 ml Isopropanol, trägt 24,6 g Chloranil (0,1 Mole) ein und erwärmt die Mischung auf 35°. Durch Zutropfen von 2n Sodalösung wird ständig der pH-Wert auf 5,8-6,0 gehalten. Es bildet sich ein Khakifarbender Niederschlag. Nach 4 Stunden steigert man die Temperatur auf 45° und führt unter weiterer pH-Kontrolle die Kondensation zu Ende, bis keine Sodalösung mehr verbraucht wird. Das erhaltene Kondensationsrodukt wird bei 20° abgesaugt, mit 100 ml Wasser und dann mit Aceton gewaschen. Nach Trocknung bei 60° im Vakuum erhält man 53,5 g eines Produktes, das überwiegend der Formel

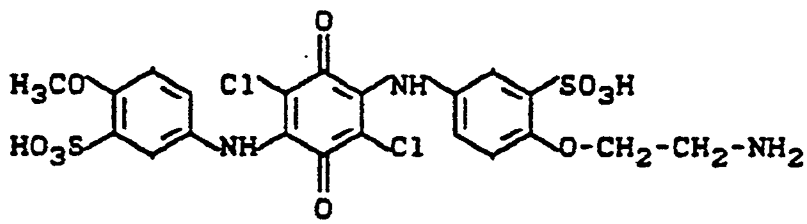

entspricht, als Nebenbestandteile außerdem die symmetrischen Kondensationsprodukte 2,5-Bis-(4-(β-aminoethoxy)-3-sulfo-phenylamino)-3,6-dichlorchinon und 2,5-Bis-(4-methoxy-3-sulfo-phenylamino)-3,6-dichlorchinon enthält.

Beispiel 2

20,0 g Dianilid des Beispiels 1 werden in 56 ml 20%iges Oleum bei 0-5° innerhalb von 5 Stunden gleichmäßig eingetragen. Man läßt die Temperatur auf 20-25° ansteigen. Wenn das Dianilid gelöst ist, trägt man in die Lösung im Laufe von 30-45 Minuten 17,8 g Kaliumperoxodisulfat ein und hält dabei die Temperatur auf 30°. Man rührt noch 1 Stunde bei 25-30° bis zur Beendigung der Oxydation nach. Das Reaktionsgemisch wird in 400 g Eis und 100 ml Wasser eingerührt. Man saugt den ausgefallenen Niederschlag ab und wäscht ihn mit Isopropanol oder Ethanol bis zur Verdrängung der anhaftenden Schwefelsäure. Die erhaltene Dioxazinfarbbase kann im Luftstrom bei 50° getrocknet werden. Man erhält 19,6 g. Das Produkt entspricht überwiegend der Formel

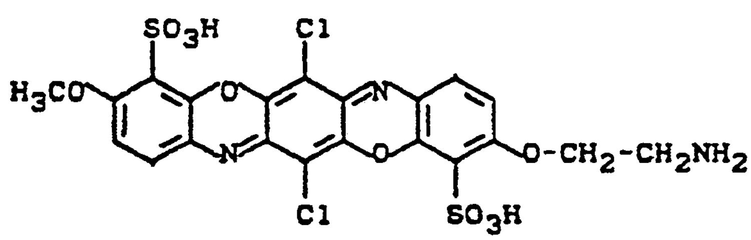

Als Begleitkomponenten treten die 3,10-Bis-(2-aminoethoxy)- und die 3,10-Dimethoxy-6,13-dichlortriphendioxazin-disulfonsäure auf.

Das Produkt löst sich in schwach alkalischem Wasser mit blaustichig roter Farbe.

Beispiel 3

8,2 g 2-Aminobenzolsulfonsäure werden in 85 ml Wasser bei pH 6-7 gelöst. Man stellt den pH-Wert auf 5,0, läßt bei 0-5° 4,6 ml Cyanurfluorid in 5 Minuten zutropfen und hält den pH-Wert mit 2n Sodalösung auf 4,5-4,7, wobei eine teilweise Ausfällung des Kondensationsproduktes auftritt. Zur Beendigung der Kondensation rührt man den Ansatz noch 15-20 Minuten unter den obigen Bedingungen nach.

19,6 g Aminoalkoxytriphendioxazin-Komponente des Beispiels 2 werden in 340 ml Wasser durch Zugabe von ca. 35 ml 2n Natronlauge bei pH 10,5 gelöst.

Man trägt nun die Lösung der Farbbase und die Suspension der Reaktivkomponente in 80 ml vorgelegtes Wasser bei 0-5° in ca. 30 Minuten in etwa gleichen aliquoten Anteilen so ein, daß in der Reaktionsmischung ständig ein pH-Wert von 8,5 herrscht, wofür man durch gleichzeitige Zudosierung von 2n Natronlauge sorgt. Man rührt die erhaltene Lösung noch etwa 2 Stunden bei 0-5° nach und läßt dann die Temperatur auf 20° ansteigen. Wenn der Natronlaugenverbrauch zum Stillstand gekommen ist, stellt man die Lösung mit primärem Natriumphosphat (ca. 0,6 g $NaH_2PO_4 \cdot 2H_2O$) auf pH 7,0 und dampft sie im Rotationsverdampfer unter Wasserstrahlvakuum bei 30-35° zur Trockne ein oder unterwirft sie einer Sprühtrocknung. Der in Form eines braunroten Pulvers erhaltene Farbstoff entspricht überwiegend der Formel

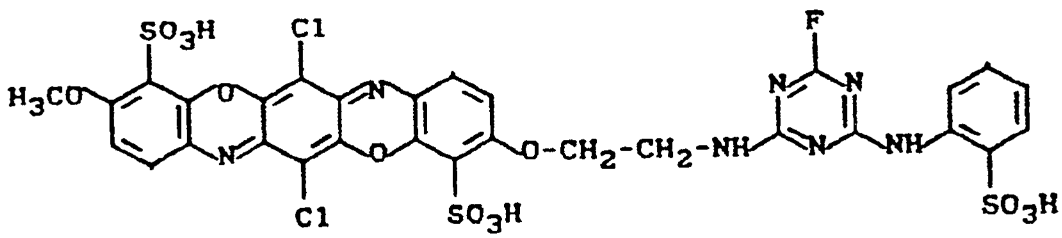

neben geringeren Mengen an bifunktionellem aus der entsprechenden 3,10-Bis-(2-aminoethoxy)-6,13-dichlortriphendioxazin-disulfonsäure entstandenen Reaktivfarbstoff.

Das erfindungsgemäße Produkt färbt Cellulosematerialien wie Baumwolle nach den für Reaktivfarbstoffe in der Technik bekannten Applikations- und Fixierverfahren, insbesondere auch aus langer Fltote bei 40-50°, in farbstarken, blaustichig roten Tönen, die sich durch sehr gute Lichtechtheit und Naßechtheiten auszeichnen. $\lambda_{max}$ = 542 nm, ~510 nm in Wasser.

Beispiel 4

7,8 g 3-Aminobenzolsulfonsäure werden in 24 ml Wasser suspendiert. Nach Zusatz von 0,1 g Natriumfluorid läßt man zu der Suspension 4,1 ml Cyanurfluorid bei 0-5° zutropfen und hält den pH-Wert im Reaktionsgemisch mit 2n Sodalösung auf 3,5. Es entsteht eine klare Lösung von 3-(2,4-Difluor-6-triazinyl)-aminobenzolsulfonsäure.

18,6 g Aminoethoxytriphendioxazin-Komponente des Beispiels 2 werden in 320 ml Wasser durch Zugabe von etwa 33 ml 2n Natronlauge bis zum pH-Wert von 10,5 gelöst.

Man läßt nun die Lösungen der Reaktivkomponente und der Triphendioxazin-Farbbase in 100 ml vorgelegtes Wasser bei 0-5° so eintropfen, daß sich im Reaktionsgemisch ein pH-Wert von 8,5-8,7 einstellt und beide Lösungen in etwa 20-30 Minuten gleichzeitig eingetragen sind. Um den pH-Wert während dieses Vorganges aufrecht zu erhalten, muß man zusätzlich 2n Natronlauge zum Reaktionsgemisch geben.

Die entstandene Lösung wird noch 3 Stunden bei 0-5° und pH 8,5-8,7 gerührt, dann läßt man die Temperatur unter weiterer pH-Kontrolle auf 20° ansteigen. Wenn der Natronlaugenverbrauch zum Stillstand gekommen ist, stellt man den pH-Wert durch Zusatz von etwa 0,7 g primärem Natriumphosphat ($NaH_2PO_4 \cdot 2H_2O$) auf 7,0 und dampft die Mischung im Rotationsverdampfer unter Vakuum bei 30-35° zur Trockne ein. Durch Nachtrocknen im Vakuum bei 45° erhält man eine spröde Masse, die sich zu einem braunroten Pulver zerkleinern läßt.

Der erhaltene Farbtoff entspricht überwiegend der Formel

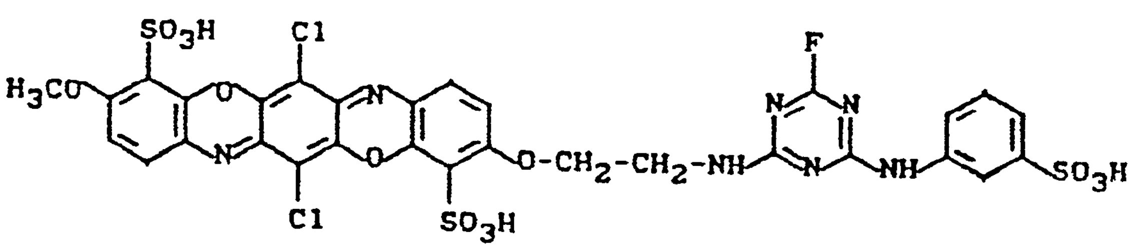

mit geringeren Beimengungen an bifunktionellem aus der entsprechenden 3,10-Bis-(2-aminoethoxy)-6,13-dichlor-triphendioxazin-disulfonsäure entstandenen Reaktivfarbstoff.

Der erhaltene Farbstoff färbt Cellulosematerialien insbesondere Baumwolle, nach den für Reaktivfarbstoffe bekannten Färbeverfahren in blaustichig roten Farbtönen mit hoher Ergiebigkeit und guten Licht- und Naßechtheiten.
$\lambda_{max}$ = 542 nm, 510 nm in Wasser.

Beispiel 5

Eine nach den Angaben des Beispiels 3 auf 11,4 g 2-Aminobenzol-1,4-disulfonsäure und 4,6 ml Cyanurfluorid in 65 ml Wasser bei 0-5° und pH 4,5-4,7 hergestellte Reaktivkomponenten-Lösung und eine auf pH 10,5 gestellte Lösung von 18,6 g Triphendioxazin-Komponente des Beispiels 2 werden durch gleichzeitiges Eintropfen in vorgelegtes Wasser bei 0-5° und pH 8,5-8,7 umgesetzt. Man verfährt im folgenden weiter, wie in Beispiel 3 beschrieben. Der erhaltene Farbstoff entspricht überwiegend der Formel

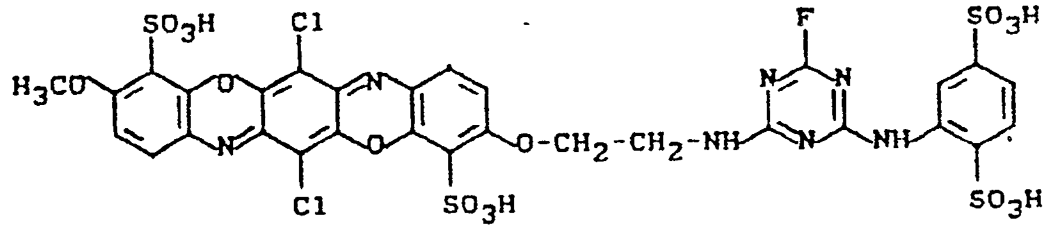

und enthält analog den Beispielen 3 und 4 geringere Mengen bifunktionellen Reaktivfarbstoff.

Der Farbstoff färbt Cellulosefasern nach den für Reaktivfarbstoffe in der Technik üblichen Applikations- und Fixierverfahren in blaustichig roten Farbtönen mit guten Licht- und Naßechtheiten.
$\lambda_{max}$ = 540 nm, 506 nm in Wasser.

Beispiel 6

26,9 g 2-(4-Amino-2-sulfophenoxy)-ethylamin-hydrochlorid (0,1 Mole), 25,5 g Natriumsalz der 5-Amino-2-(β-hydroxyethoxy)-benzolsulfonsäure (0,1 Mole) werden in 350 ml Wasser bei pH 6 durch Zugabe von Natronlauge gelöst. Nach Zusatz von 55 ml Isopropanol trägt man in die Lösung 24,6 g Chloranil (0,1 Mole) ein und hält mittels 2n Sodalösung den pH-Wert auf 5,8-6. Man erwärmt die mischung zunächst auf 40°, nach 4 Stunden auf 45° und führt die Kondensation zu Ende. Das Kondensationsprodukt fällt in Form kleiner Nadeln aus. Man saugt sie ab und wäscht sie mit 500 ml Wasser, anschließend mit Aceton. Das Produkt wird bei 60° im Vakuum getrocknet. Es entspricht weitgehend der Formel

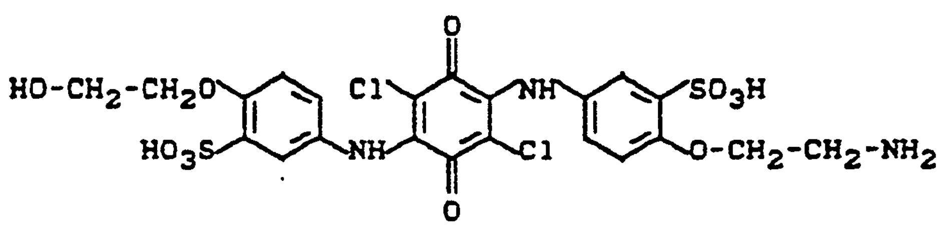

enthält als geringere Nebenbestandteile die symmetrischen Kondensationsprodukte 2,5-Bis-(4-(β-aminoethoxy)-3-sulfo-phenylamino)-3,6-dichlorchinon und 2,5-Bis-(4-(β-hydroxyethoxy)-3-sulfo-phenylamino)-3,6-dichlorchinon.

Beispiel 7

20,0 g Dianilid des Beisipels 6 werden in 56 ml 20%iges Oleum in 3 Stunden bei 0 bis –5° eingetragen. Nach dem Eintragen rührt man noch 1 Stunde bei –5 bis –7° und steigert, wenn alles gelöst ist, die Temperatur auf +20°. Man trägt innerhalb 45 Minuten 17 g Kaliumperoxodisulfat in die Lösung ein und hält die Temperatur auf 35°. Nach dem Eintragen wird die Mischung noch 1 Stunde bei 33-35° gerührt, danach ist der oxydative

Ringschluß zum Triphendioxazin beendet. Man rührt die erhaltene blaue Lösung in 360 g Eis ein, saugt die entstandene feinteilige Suspension ab und verdrängt aus dem Filterkuchen die anhaftende Schwefelsäure durch Waschen mit Isopropanol. Nach Trocknen des Filterkuchens im Luftstrom bei 45° erhält man 22,4 g eines Produktes, das überwiegend der Formel

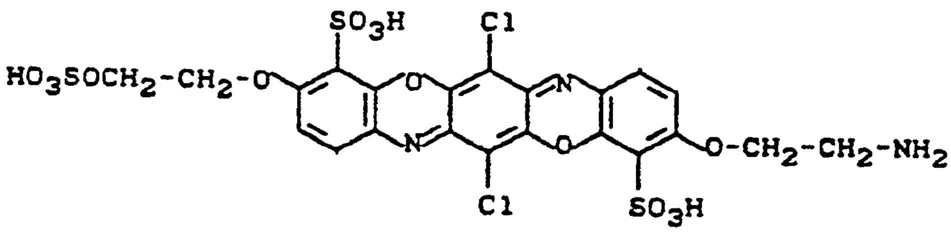

entspricht, daneben als Begleitbestandteile die 3,10-Bis-(2-aminoethoxy)-und die 3,10-Bis-(2-sulfatoethoxy)-6,13-dichlortriphendioxazin-disulfonsäure enthält.

Das Produkt löst sich in schwach alkalischem Wasser mit blaustichig roter Farbe.

Beispiel 8

19,0 g Triphendioxazin-Komponente aus Beispiel 7 werden in 320 ml Wasser und ca. 33 ml 2n Natronlauge bei pH 10,5 gelöst.

Man legt 100 ml Wasser und 50 ml Aceton vor und läßt nun gleichzeitig obige Farbstofflösung und 4,6 ml 2,4,6-Trifluor-5-chlorpyrimidin in 20 ml Aceton bei 20° eintropfen. Durch zusätzliches Eindosieren von 2n Natronlauge in das Reaktionsgemisch wird der pH-Wert auf 8,5 gehalten. Man rührt das Reaktionsgemisch unter automatischer pH-Kontrolle über Nacht weiter, stellt dann den pH-Wert mit etwa 0,6 g primärem Natriumphosphat ($NaH_2PO_4 \cdot 2H_2O$) auf 7,0 und dampft den teils suspendierten, teils gelösten Farbstoff im Rotationsverdampfer unter Vakuum bei 30-35° zur Trockne ein. Man erhält einen Farbstoff, der überwiegend der Formel

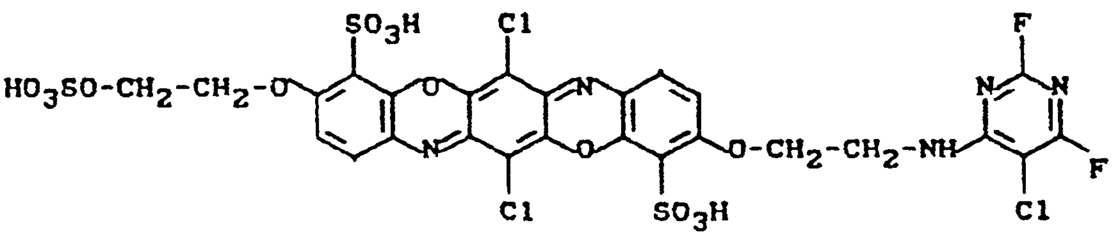

entspricht und Baumwolle nach den für Reaktivfarbstoffe bekannten Färbetechniken in blaustichig roten Tönen mit ausgezeichneten Echtheiten färbt.
$\lambda_{max}$ = 537 nm, 504 nm in Wasser.

Beispiel 9

Setzt man in der im Beispiel 8 beschrieben Weise 18,6 g Triphendioxazin-Komponente des Beispiels 2 mit 4,6 ml 2,4,6-Trifluor-5-chlorpyrimidin um und verfährt im weiteren wie dort beschrieben, so erhält man einen Farbstoff, der überwiegend der Formel

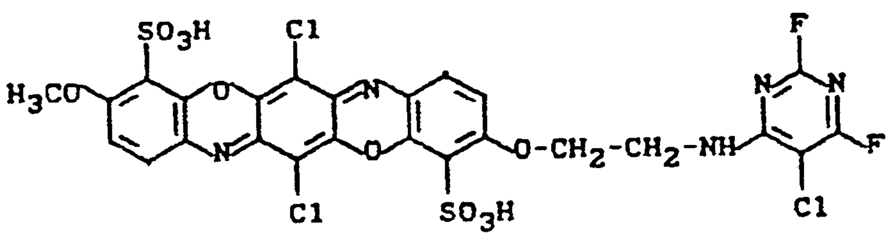

enspricht und der Baumwolle aus langer Flotte bei 50° in Gegenwart von Soda in blaustichig roten Tönen mit

hoher Ergiebigkeit anfärbt.
$\lambda_{max}$ = 537 nm, 504 nm in Wasser.

Beispiel 10

6,6 g 2-Aminobenzolsulfonsäure werden nach den Angaben des Beispiels 3 mit 3,7 ml Cyanurfluorid bei 0-5° und pH 4,5-4,7 kondensiert.

16,9 g Triphendioxazin-Komponente des Beispiels 7 werden in 320 ml Wasser durch Zugabe von 2n Natronlauge bei pH 10,5 gelöst.

Man dosiert nun die Suspension der Reaktivkomponente und die Lösung der Farbbase in der in Beispiel 3 beschriebenen Weise in 80 ml vorgelegtes Eiswasser unter gleichzeitiger Zugabe von Natronlauge bei pH 8,5-8,7 ein und verfährt anschließend weiter nach der Lehre des Beispiels 3. Man erhält nach Eindampfen der Farbstofflösung einen Reaktivfarbstoff, der im wesentlichen durch die Formel

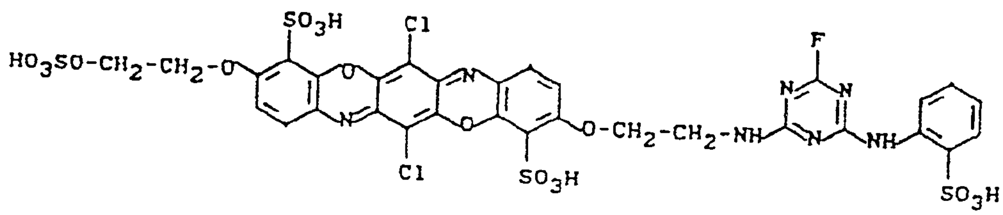

beschrieben werden kann und der als Beimengung geringere Mengen bifunktionellen Reaktivfarbstoff, entstanden aus 3,10-Bis-(2-aminoethoxy)-6,13-dichlor-triphendioxazin-disulfonsäure, enthält.

Der Farbstoff färbt Baumwolle aus langer Flotte in blaustichig roten Tönen mit sehr guten Echtheiten.
$\lambda_{max}$ 541 nm, 508 nm in Wasser.

Beispiel 11

Setzt man nach der Lehre des Beispiels 4 6,3 g 3-Aminobenzolsulfonsäure und 3,4 ml Cyanurfluorid um und kondensiert anschließend mit 16,8 g β-Aminoethoxytriphendioxazin-Komponente des Beispiels 7, so erhält man einen Reaktivfarbstoff der Formel,

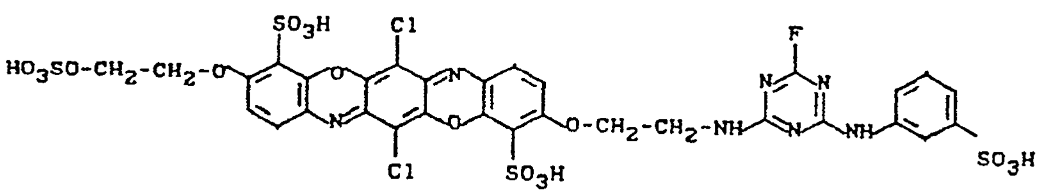

der Cellulose nach den für Reaktivfarbstoffe bekannten Färbeverfahren in blaustichig roten Farbtönen mit sehr guten Echtheiten anfärbt.
$\lambda_{max}$ = 542 nm, 510 nm in Wasser.

Beispiel 12

7,2 g 2-Aminobenzol-1,4-disulfonsäure und 2,9 ml Cyanurfluorid werden, wie im Beispiel 5 beschrieben, kondensiert und anschließend mit 8,4 g β-Aminoethoxytriphendioxazin-Komponente des Beispiels 7 umgesetzt. Nach Aufarbeitung analog Beispiel 5 erhält man einen Farbstoff, der überwiegend der Formel

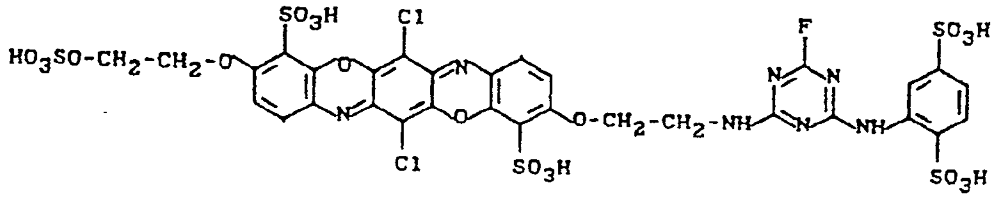

entspricht und Cellulose nach den für Reaktivfarbstoffe bekannten Färbeverfahren in blaustichig roten Farbtönen anfärbt.
$\lambda_{max}$ = 539 nm, 505 nm in Wasser.

Beispiel 13

8,3 g Cyanurchlorid werden in 50 ml Aceton gelöst. Man gibt die Lösung auf 100 g Eis und läßt bei 0-5° eine neutralisierte Lösung von 3,9 g 3-Aminobenzolsulfonsäure und 3,9 g 4-Aminobenzolsulfonsäure in 75 ml Wasser in 1 Stunde zu der Suspension des Cyanurchlorids zutropfen. Der pH-Wert im Reaktionsgemisch wird mit 2n Sodalösung auf 4,0-4,5 gehalten, nach beendeter Umsetzung die Lösung geklärt.

18,6 g Aminoethoxytriphendioxazin-Komponente des Beispiels 2 werden in 320 ml Wasser mittels 33 ml 2n Natronlauge bei pH 10,5 gelöst.

Beide Lösungen werden nun gleichzeitig bei 20° und pH 8,5-8,7 in 100 ml Wasser eingetropft. Durch weiteres Einhalten der angegebenen Bedingungen wird der Kondensationsvorgang zu Ende geführt. Nach beendeter Umsetzung dampft man die erhaltene Lösung bei 30-35° zur Trockene ein. Der erhaltene Farbstoff entspricht überwiegend der Formel

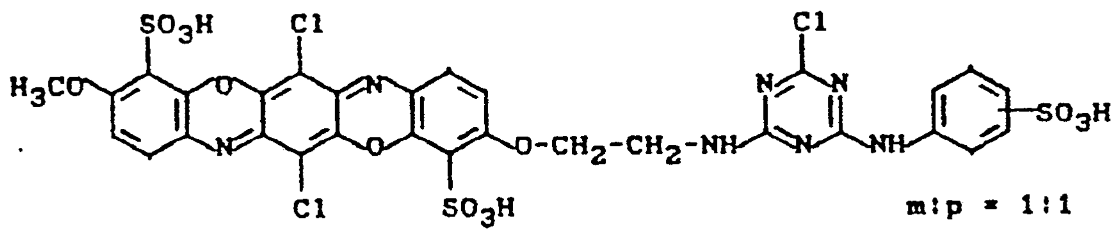

m:p = 1:1

und färbt Cellulosematerialien nach den für Reaktivfarbstoffe in der Technik bekannten Färbeverfahren in blaustichig roten Tönen.
$\lambda_{max}$ = 542 nm, 510 nm in Wasser

Weitere Cellulosefasern rot färbende Reaktivfarbstoffe der allgemeinen Formel (I) werden erhalten, wenn man analog zu den obigen Beispielen 1 und 6 äquimolekulare Mengen der Aminoverbindungen (XI) und (XVI) und der Benzochinone (IX) miteinander kondensiert,

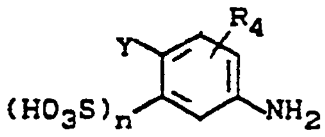 + 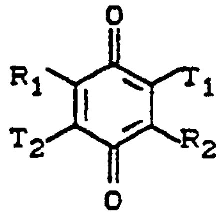 +

(XI) (IX)

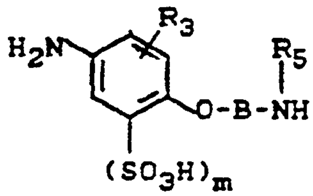

(XVI)

die erhaltenen Dianilide der Formel

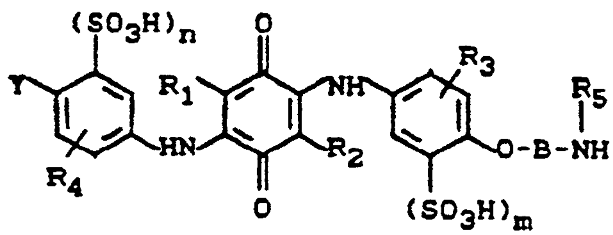

(XVII)

in die in Spalte II der Tabelle I aufgeführten Aminoalkoxytriphendioxazin-Komponenten durch oxydativen Ringschluß analog den Beispielen 2 und 7, gegebenenfalls unter zusätzliche Einführung von Sulfato-oder Sulfonsäuregruppen, überführt und anschließend mit den in Spalte III der Tabelle angegebenen Reaktivkomponenten kondensiert.

**Tabelle I**

| Beispiel | Triphendioxazin | Reaktivkomponente |
|---|---|---|
| 14 | 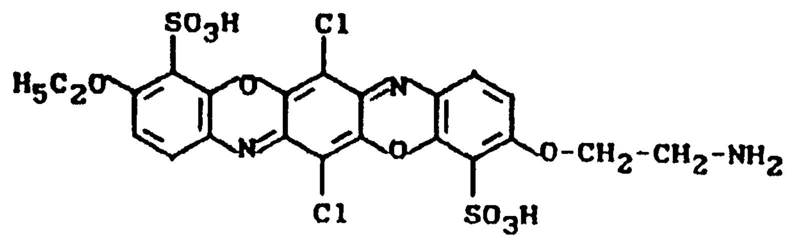 | 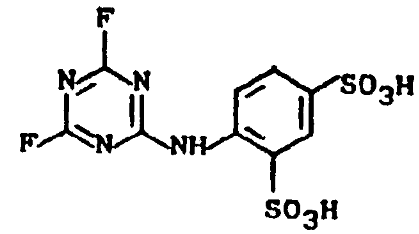 |
| 15 | " | 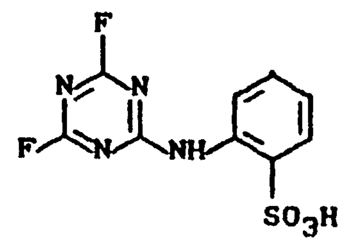 |
| 16 | " | 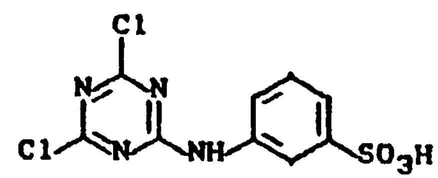 |

**Tabelle I** (Fortsetzung)

| Beispiel | Triphendioxazin | Reaktivkomponente |
|---|---|---|
| 17 | 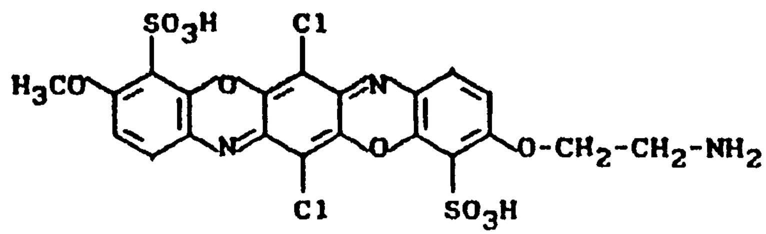 | 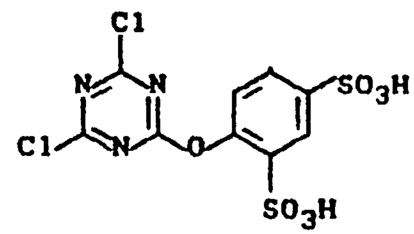 |
| 18 | " | 1. 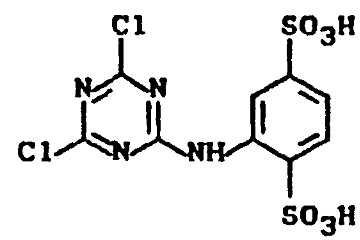 2. 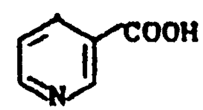 |

**Tabelle I** (Fortsetzung)

| Beispiel | Triphendioxazin | Reaktivkomponente |
|---|---|---|
| 19 | 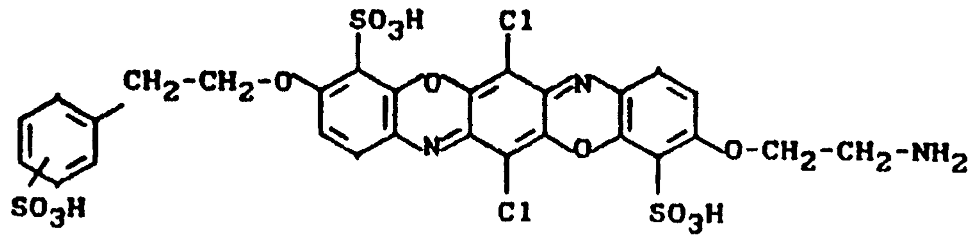 | 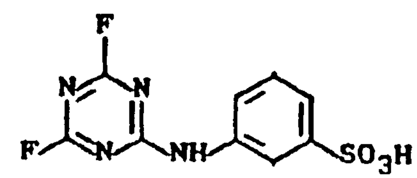 |
| 20 | 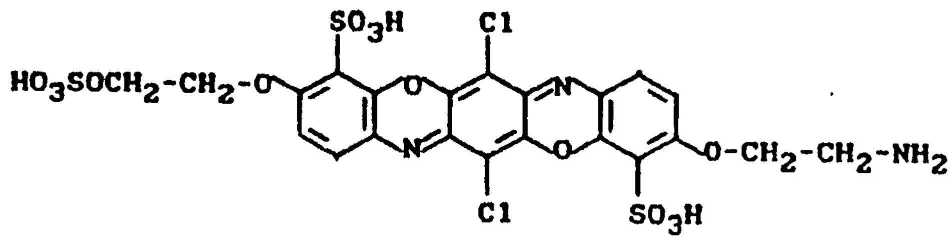 | 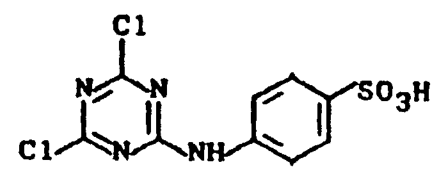 |
| 21 | " | 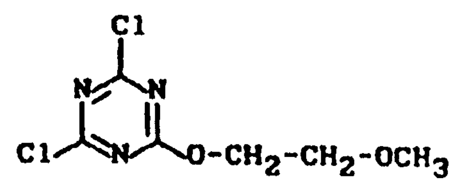 |

Tabelle I (Fortsetzung)

| Beispiel | Triphendioxazin | Reaktivkomponente |
|---|---|---|
| 22 | 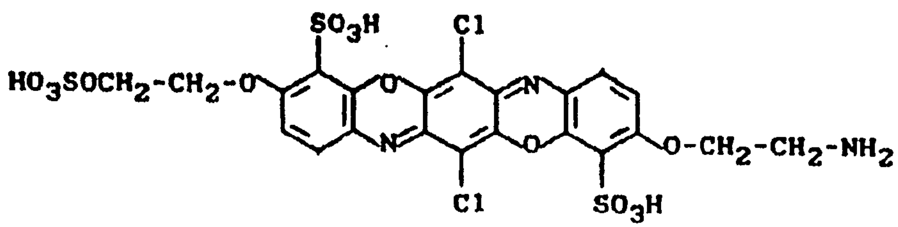 | 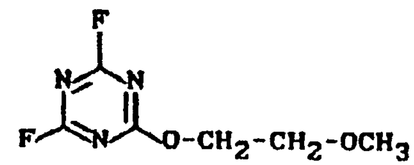 |
| 23 | 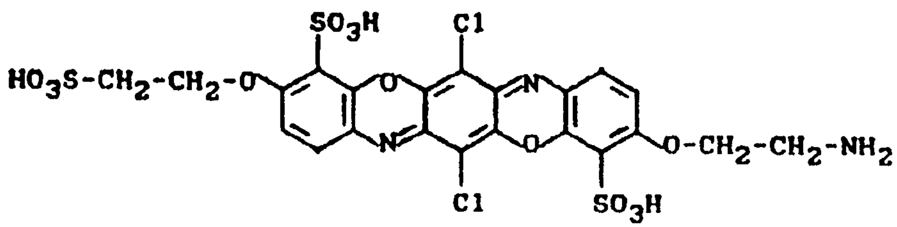 | 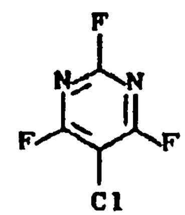 |
| 24 | " | 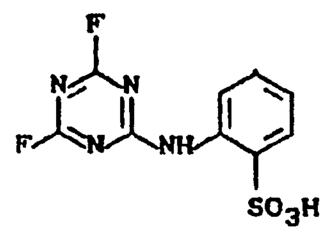 |
| 25 | " | 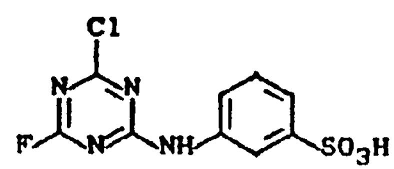 |

**Tabelle I** (Fortsetzung)

| Beispiel | Triphendioxazin | Reaktivkomponente |
|---|---|---|
| 26 | 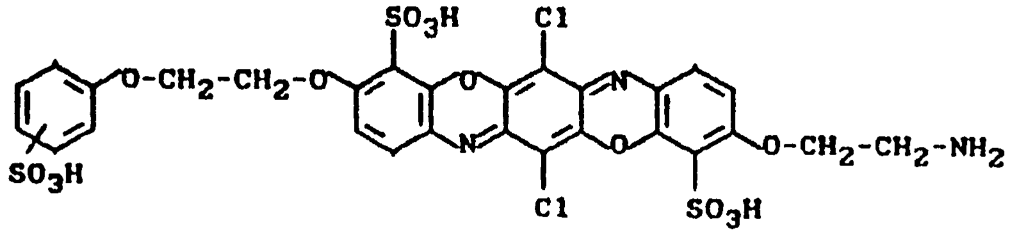 | 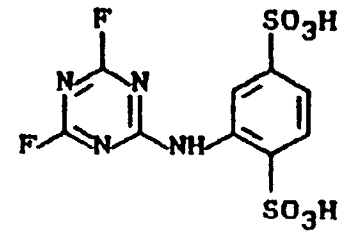 |
| 27 | " | 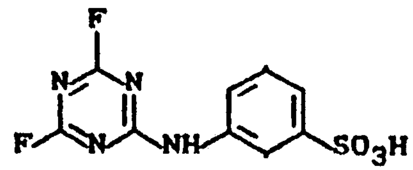 |
| 28 | " | 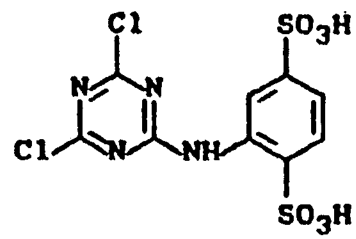 |

**Tabelle I (Fortsetzung)**

| Beispiel | Triphendioxazin | Reaktivkomponente |
|---|---|---|
| 29 | 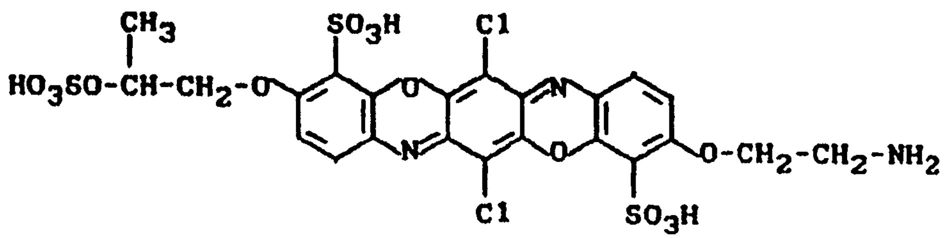 | 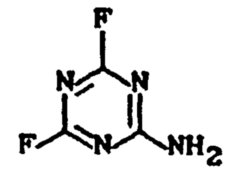 |
| 30 | 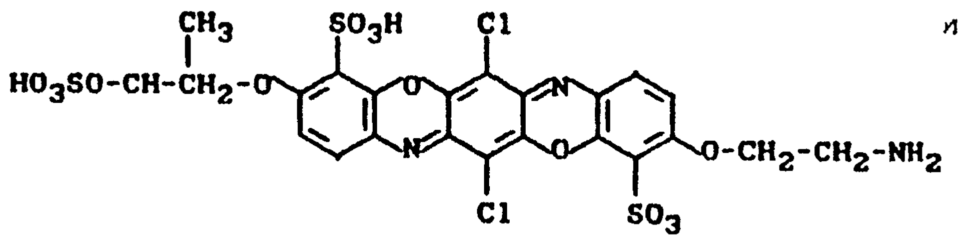 | 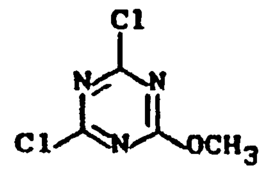 |
| 31 | 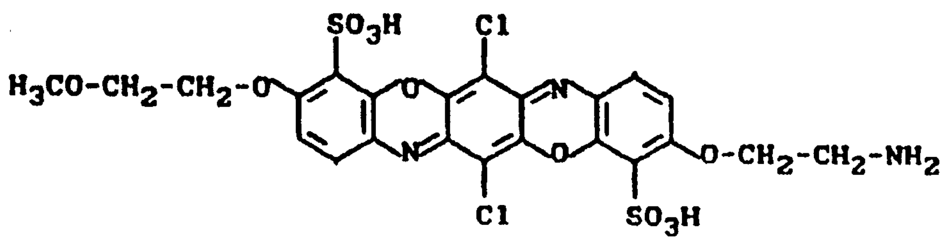 | 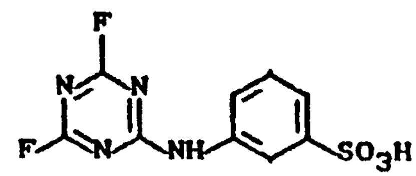 |

**T a b e l l e   I** (Fortsetzung)

| Beispiel | Triphendioxazin | Reaktivkomponente |
|---|---|---|
| 32 | 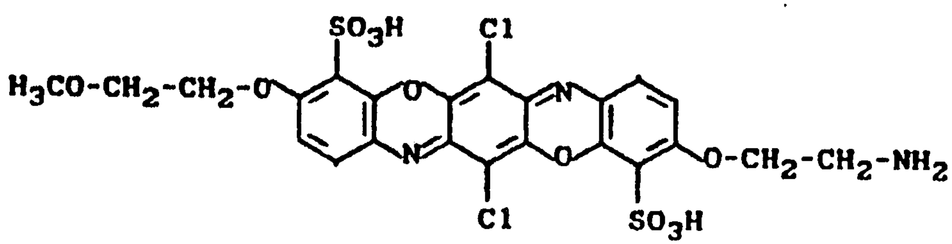 | 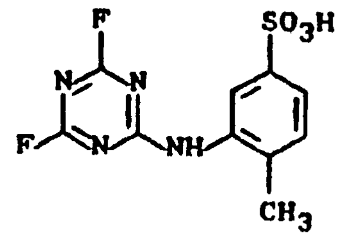 |
| 33 | 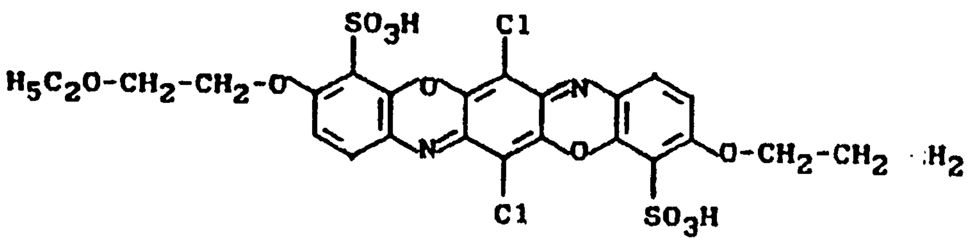 | 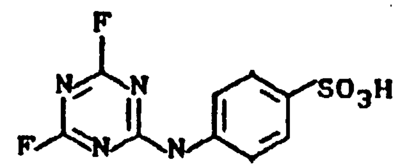 |
| 34 | " | 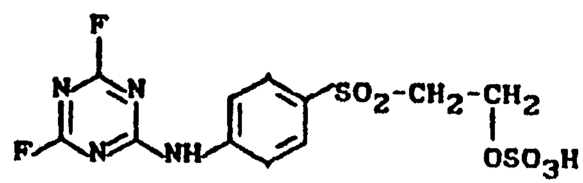 |

**Tabelle I** (Fortsetzung)

| Beispiel | Triphendioxazin | Reaktivkomponente |
|---|---|---|
| 35 | 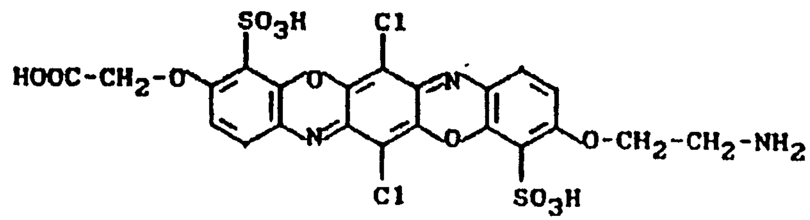 | 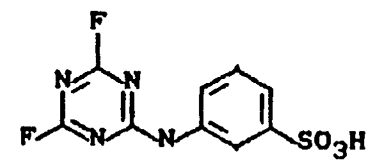 |
| 36 | " | 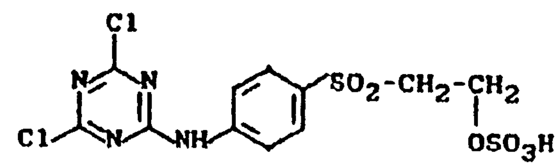 |
| 37 | 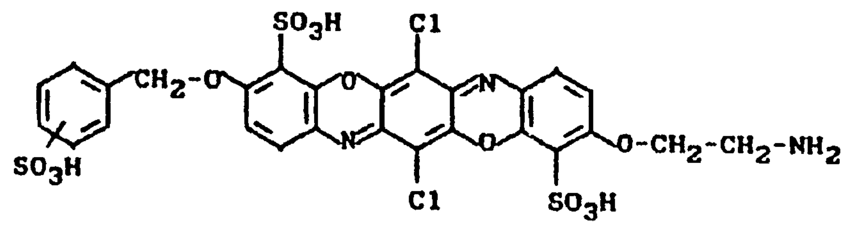 | 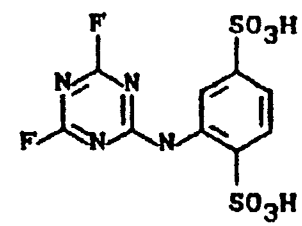 |
| 38 | 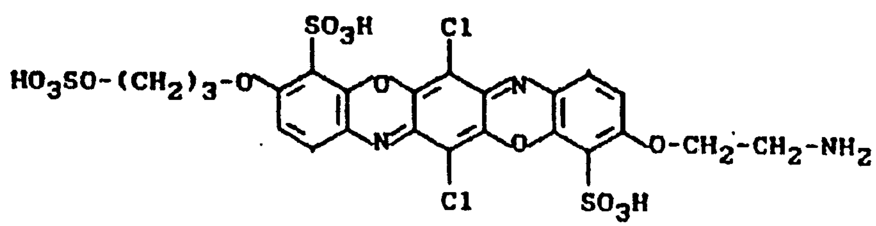 | 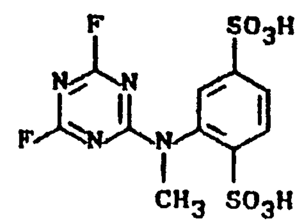 |

**Tabelle 1** (Fortsetzung)

| Beispiel | Triphendioxazin | Reaktivkomponente |
| --- | --- | --- |
| 39 | 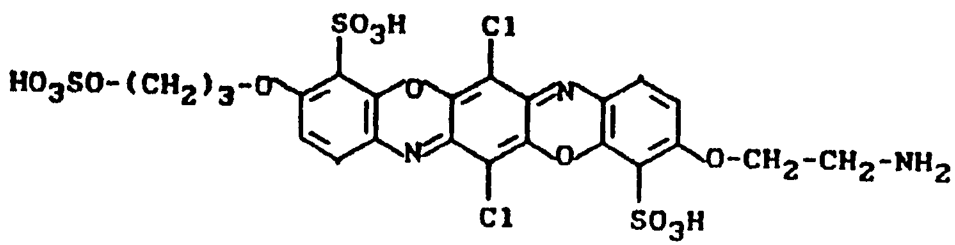 | 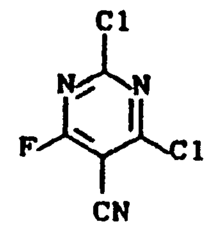 |
| 40 | 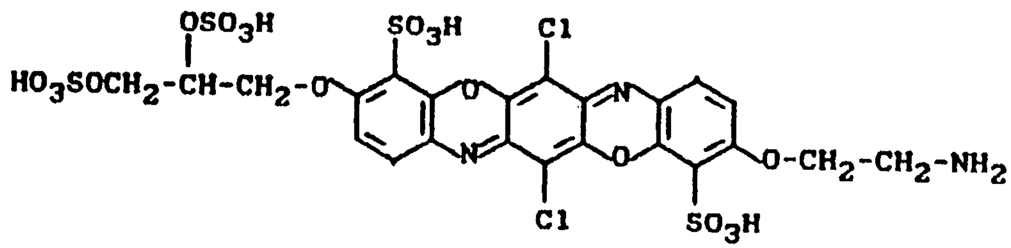 | 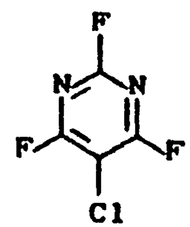 |
| 41 | " | 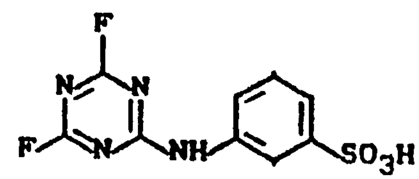 |

**Tabelle I** (Fortsetzung)

| Beispiel | Triphendioxazin | Reaktivkomponente |
|---|---|---|
| 42 | 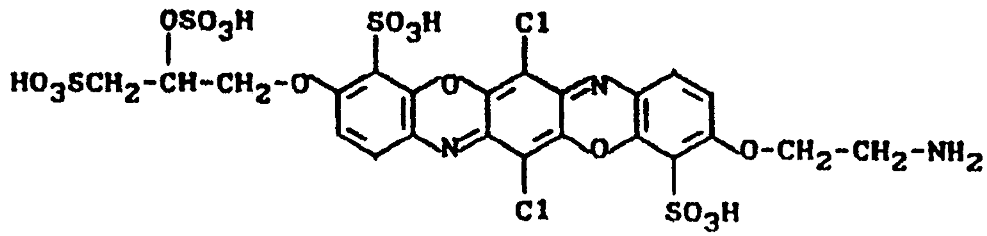 | 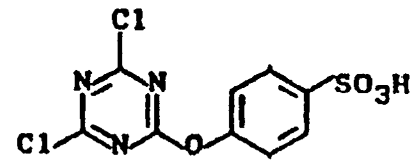 |
| 43 | " | 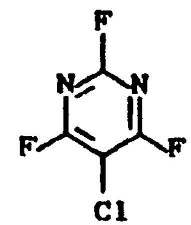 |
| 44 | 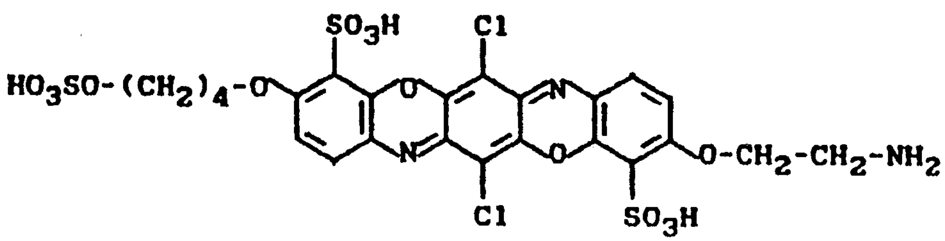 | 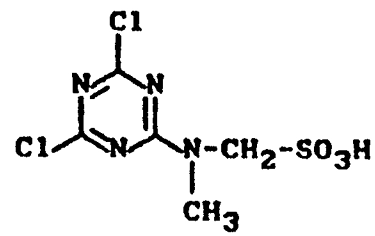 |

**Tabelle I** (Fortsetzung)

| Beispiel | Triphendioxazin | Reaktivkomponente |
| --- | --- | --- |
| 45 | 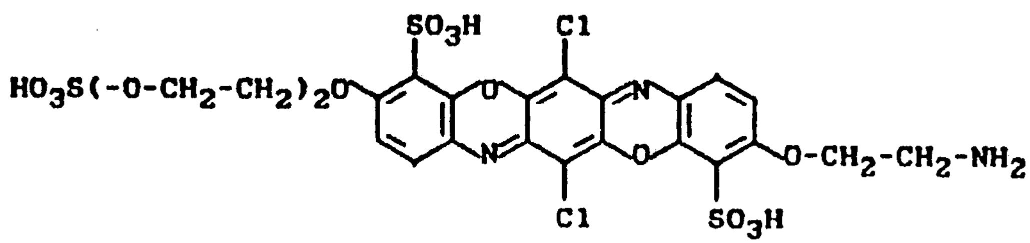 | 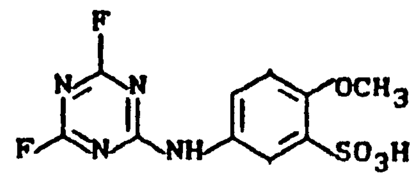 |
| 46 | 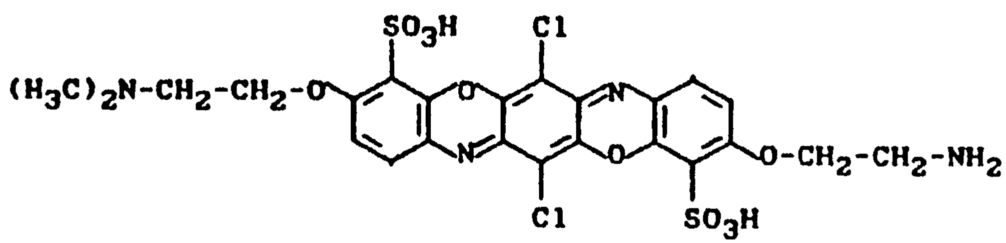 | 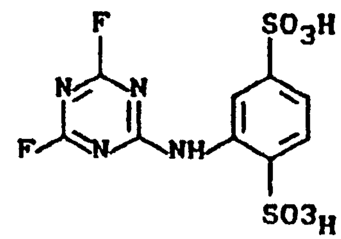 |
| 47 | 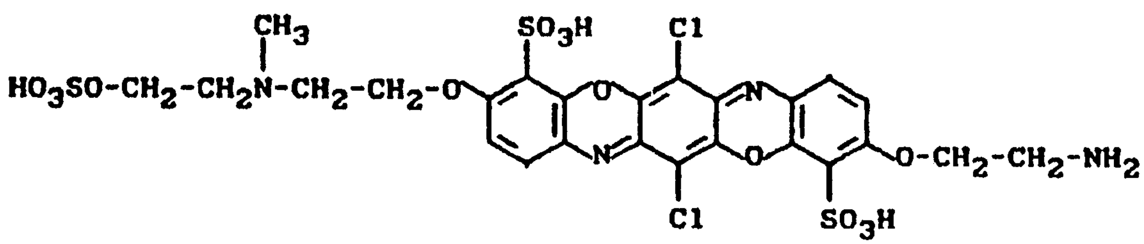 | 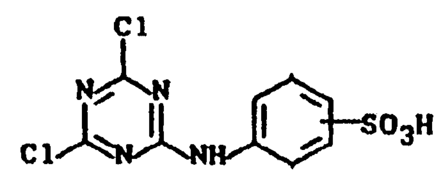 m:p = 1:1 |

**T a b e l l e I** (Fortsetzung)

| Beispiel | Triphendioxazin | Reaktivkomponente |
|---|---|---|
| 48 | 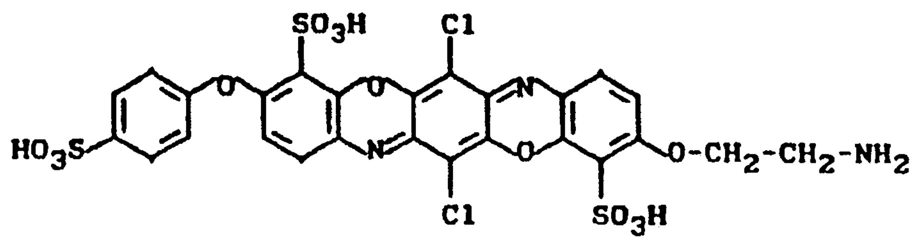 | 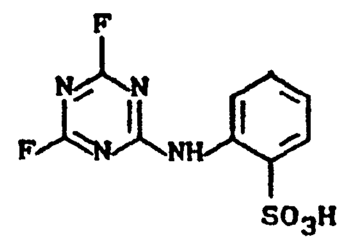 |
| 49 | " | 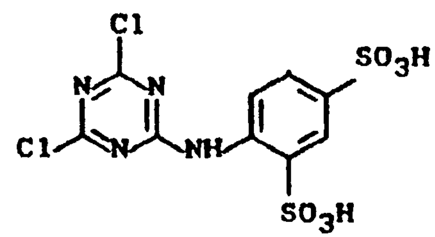 |
| 50 | " | 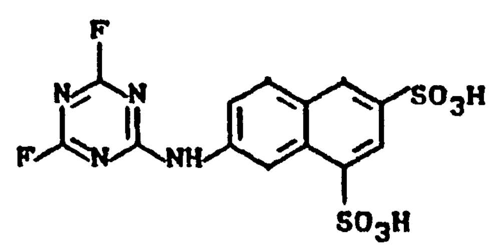 |

**Tabelle I** (Fortsetzung)

| Beispiel | Triphendioxazin | Reaktivkomponente |
|---|---|---|
| 51 | 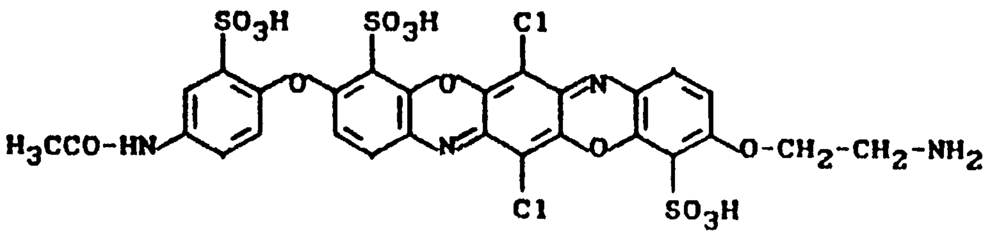 | 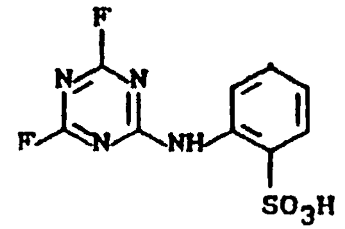 |
| 52 | 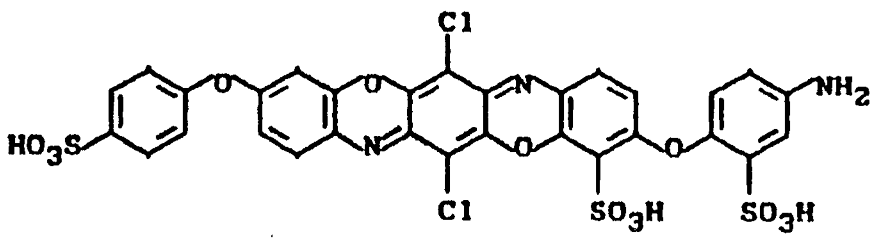 | 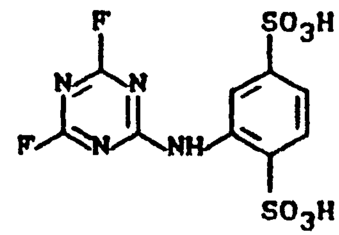 |
| 53 | 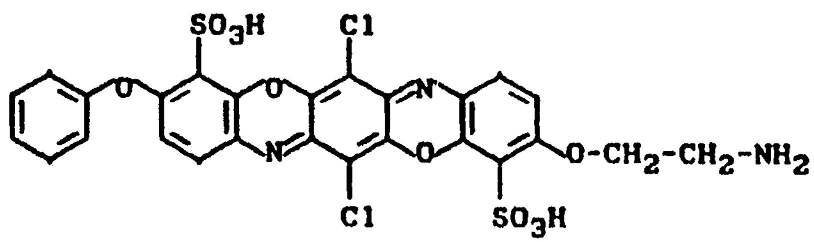 | 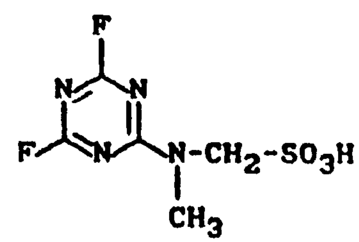 |

**Tabelle I (Fortsetzung)**

| Beispiel | Triphendioxazin | Reaktivkomponente |
|---|---|---|
| 54 | 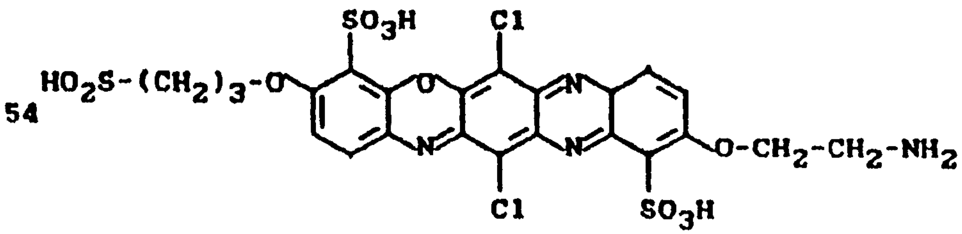 | 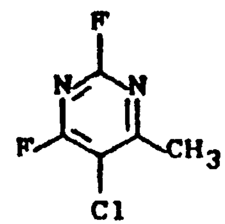 |
| 55 | 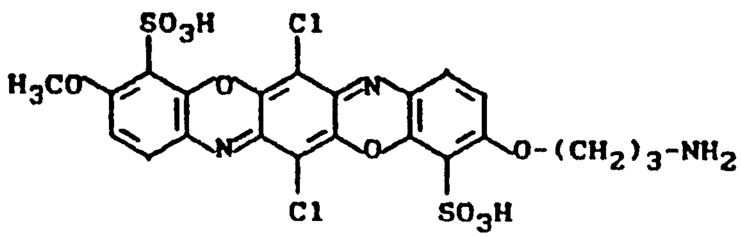 | 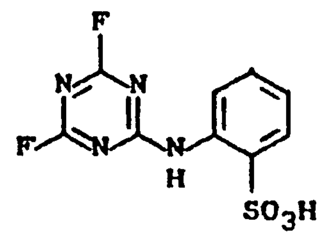 |
| 56 | 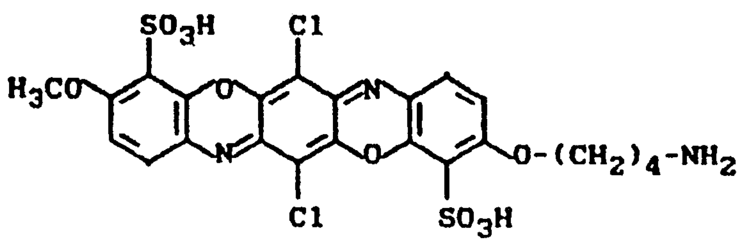 | 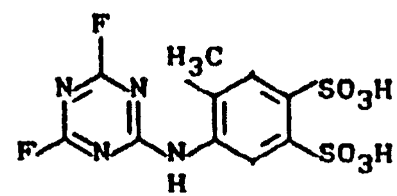 |

**Tabelle 1** (Fortsetzung)

| Beispiel | Triphendioxazin | Reaktivkomponente |
|---|---|---|
| 57 | 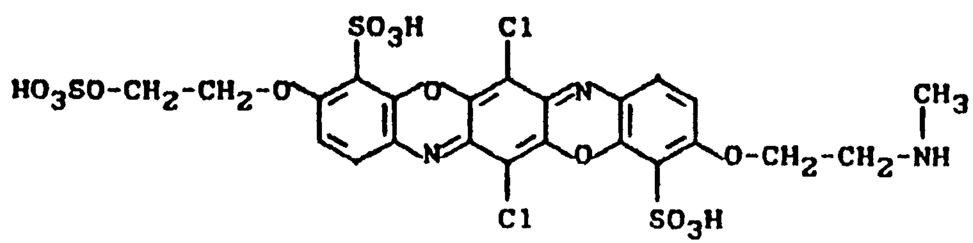 | 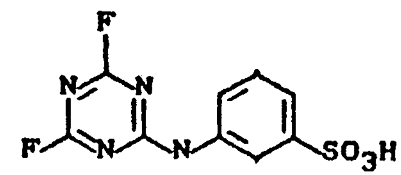 |
| 58 | " | 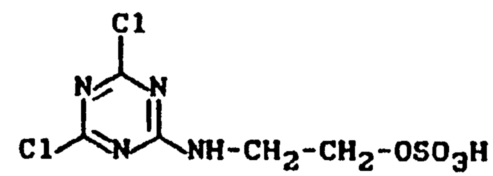 |
| 59 | " | 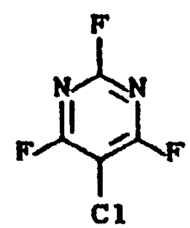 |

**Tabelle I** (Fortsetzung)

| Beispiel | Triphendioxazin | Reaktivkomponente |
|---|---|---|
| 60 | 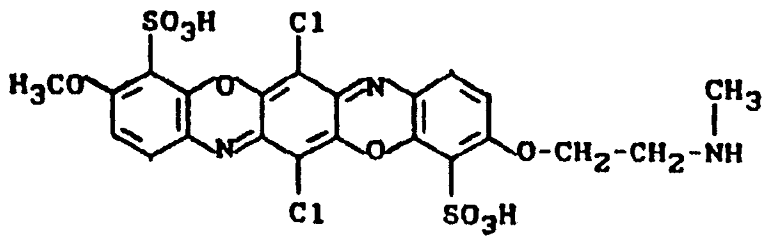 | 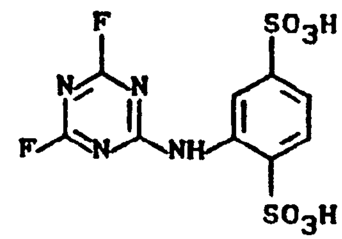 |
| 61 | " | 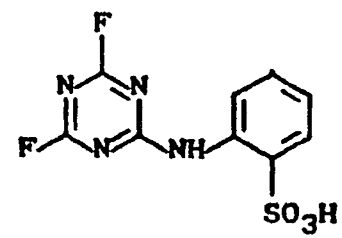 |
| 62 | 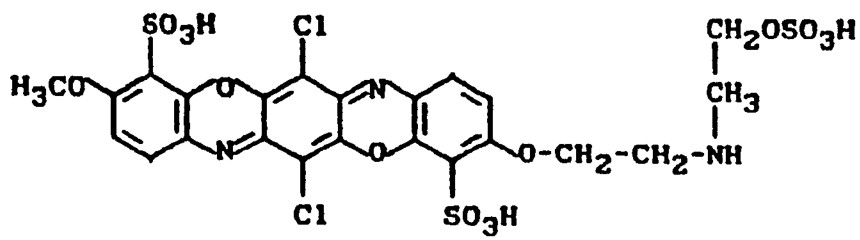 | 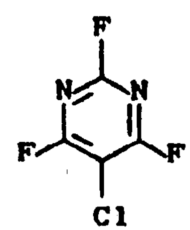 |

**Tabelle I** (Fortsetzung)

| Beispiel | Triphendioxazin | Reaktivkomponente |
|---|---|---|
| 63 | 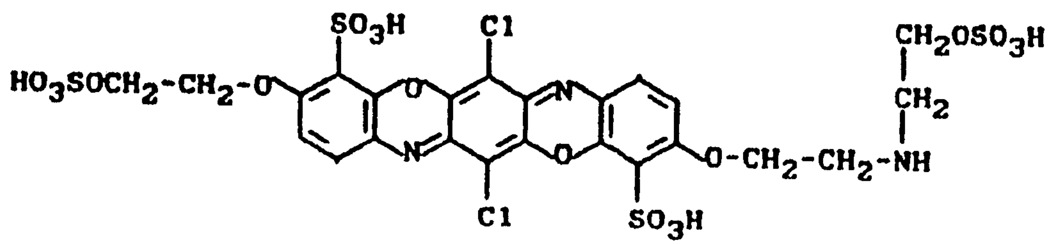 | 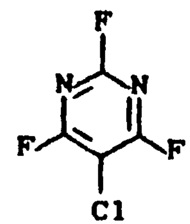 |
| 64 | " | 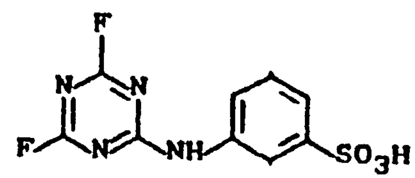 |
| 65 | " | 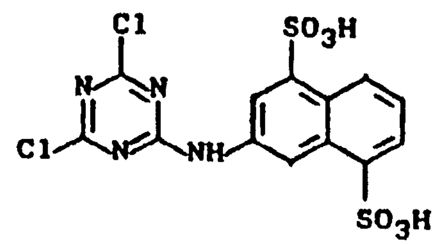 |

**Tabelle I** (Fortsetzung)

| Beispiel | Triphendioxazin | Reaktivkomponente |
|---|---|---|
| 66 | 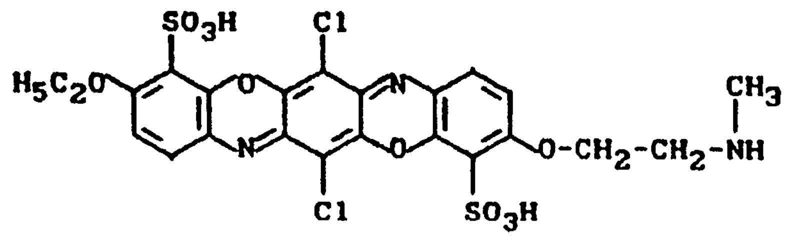 | 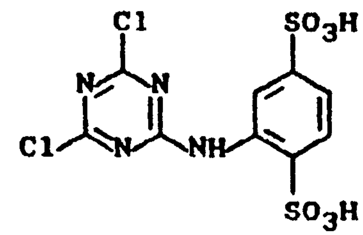 |
| 67 | 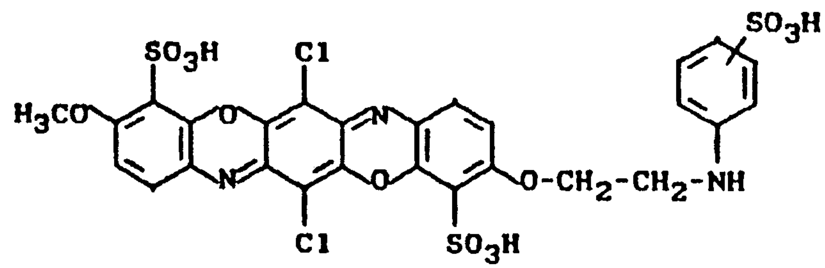 | 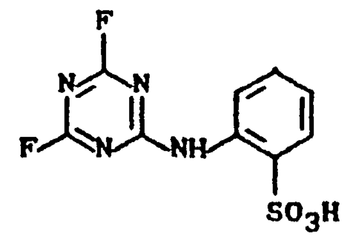 |
| 68 | 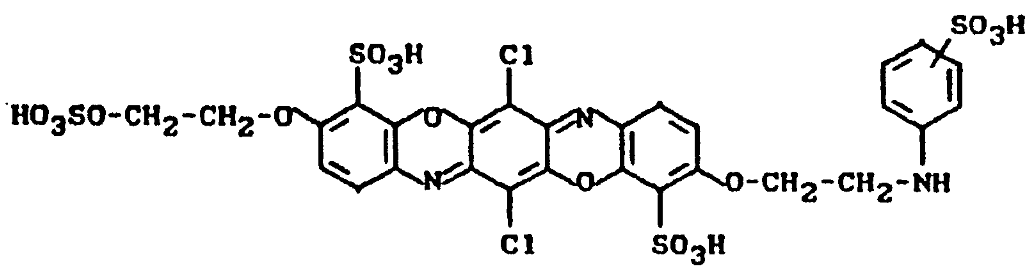 | 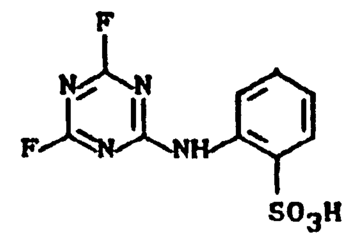 |

**Tabelle I** (Fortsetzung)

| Beispiel | Triphendioxazin | Reaktivkomponente |
|---|---|---|
| 69 | 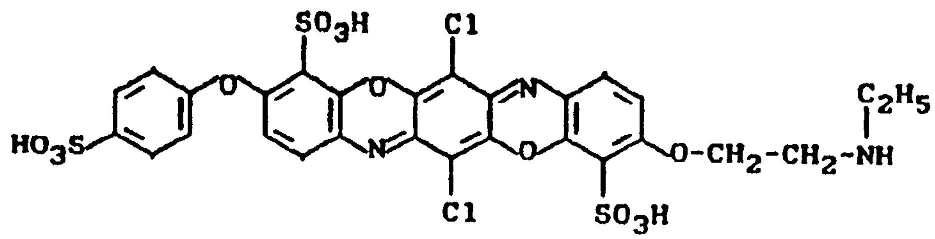 | 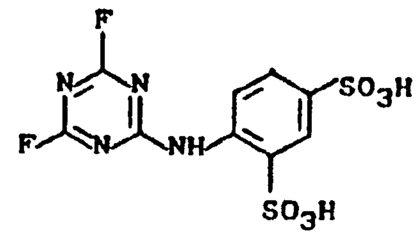 |
| 70 | 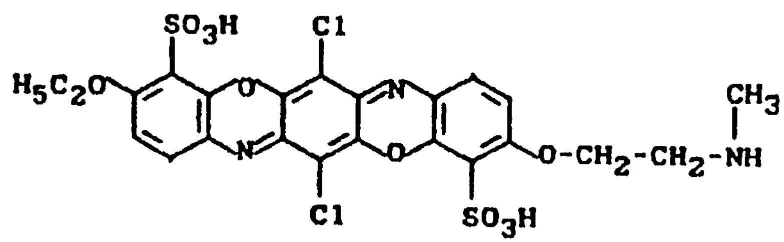 | 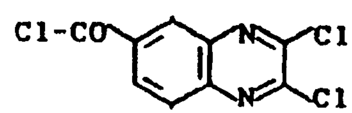 |
| 71 | 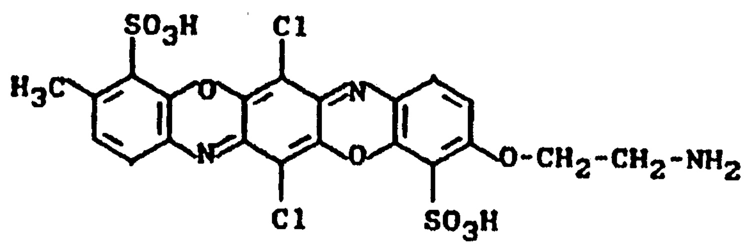 | 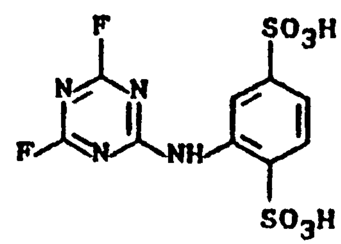 |

**Tabelle I** (Fortsetzung)

| Beispiel | Triphendioxazin | Reaktivkomponente |
|---|---|---|
| 72 | 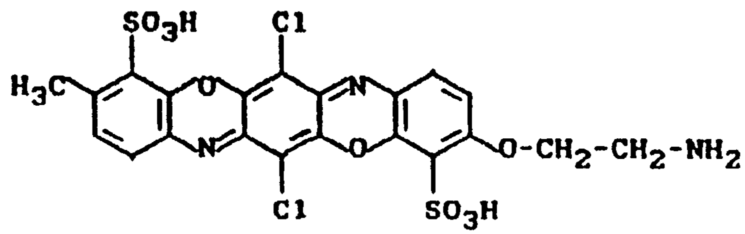 | 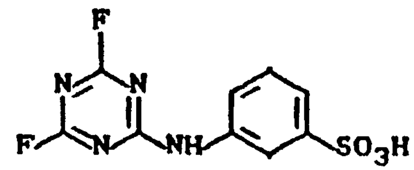 |
| 73 | " | 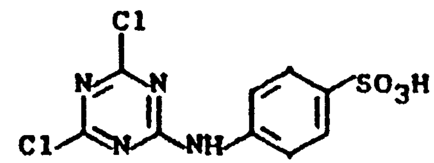 |
| 74 | 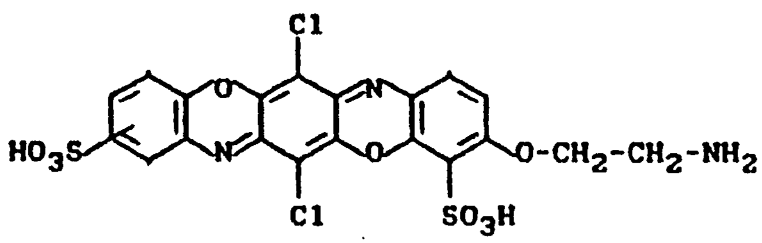 | 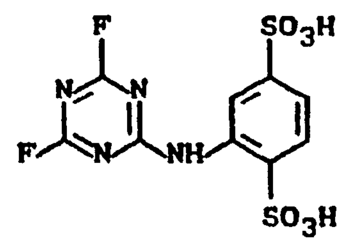 |

**T a b e l l e I** (Fortsetzung)

| Beispiel | Triphendioxazin | Reaktivkomponente |
|---|---|---|
| 75 | 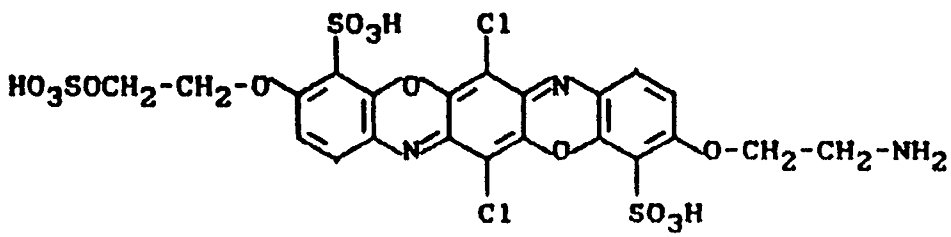 | 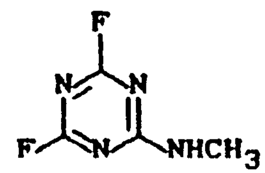 |
| 76 | " | 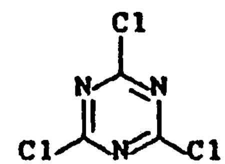 |
| 77 | " | 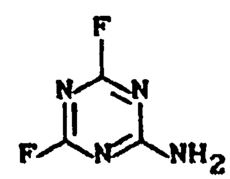 |

**Tabelle I** (Fortsetzung)

| Beispiel | Triphendioxazin | Reaktivkomponente |
|---|---|---|
| 78 | 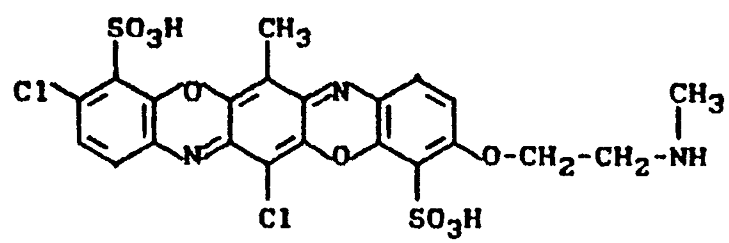 | 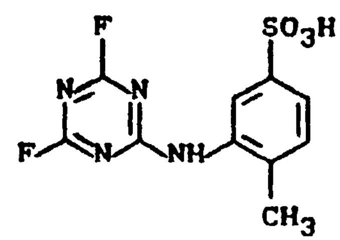 |
| 79 | 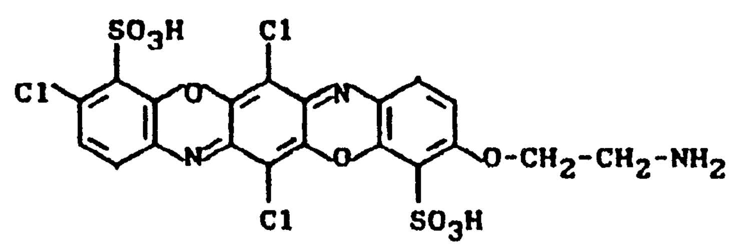 | 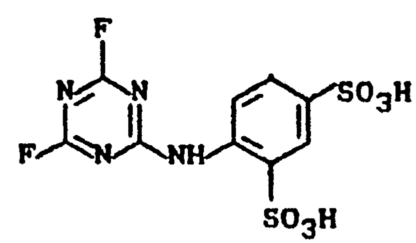 |

**Tabelle I** (Fortsetzung)

| Beispiel | Triphendioxazin | Reaktivkomponente |
|---|---|---|
| 80 | 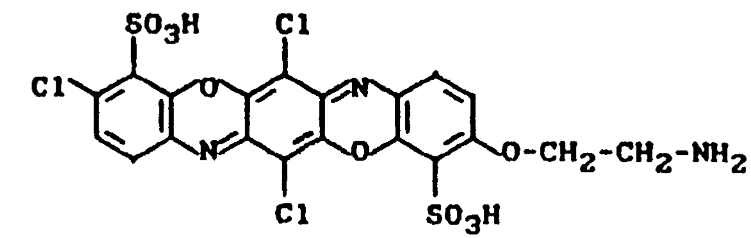 | 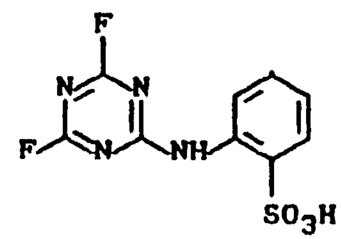 |
| 81 | 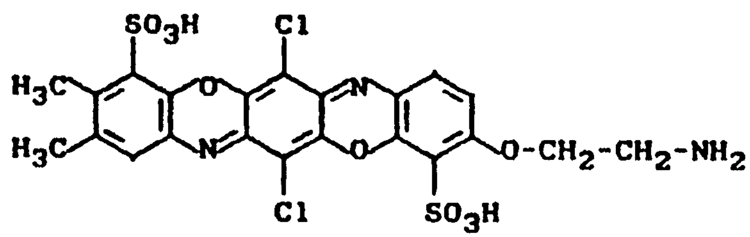 | 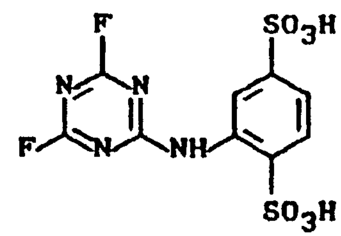 |
| 82 | " | 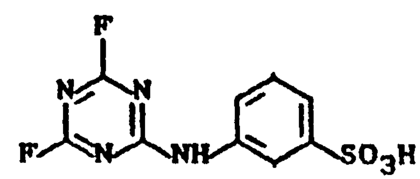 |

**T a b e l l e 1** (Fortsetzung)

| Beispiel | Triphendioxazin | Reaktivkomponente |
| --- | --- | --- |
| 83 | 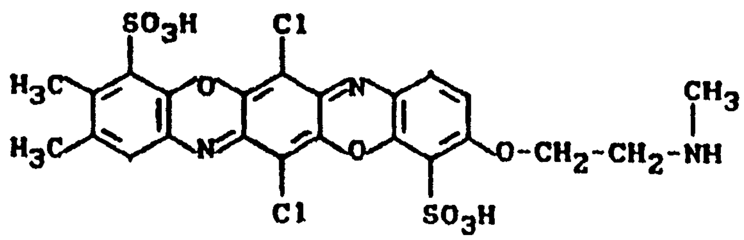 | 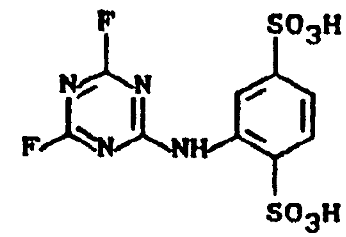 |
| 84 | 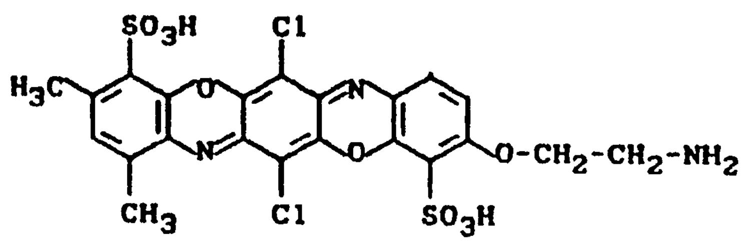 | 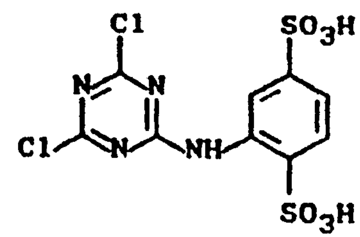 |
| 85 | " | 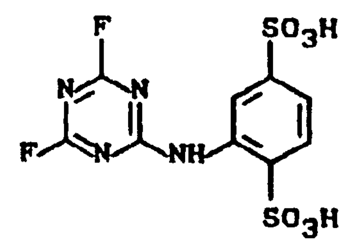 |

**Tabelle I** (Fortsetzung)

| Beispiel | Triphendioxazin | Reaktivkomponente |
|---|---|---|
| 86 | 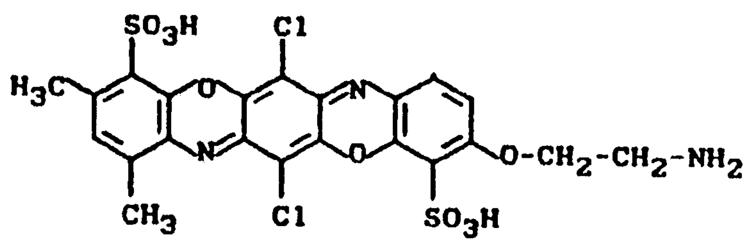 | 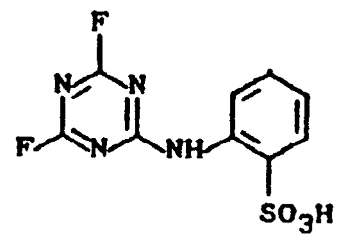 |
| 87 | 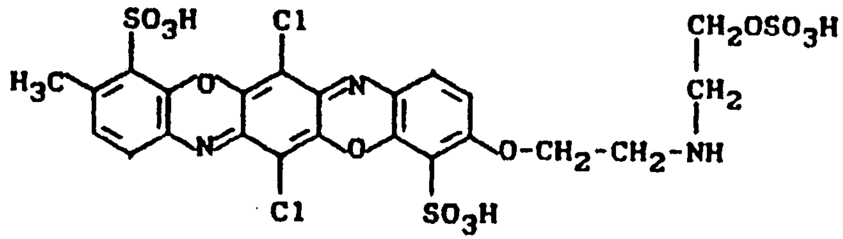 | 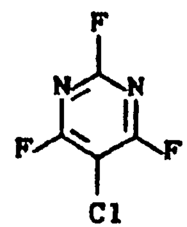 |
| 88 | " | 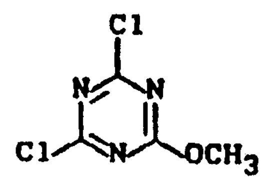 |

**Tabelle I** (Fortsetzung)

| Beispiel | Triphendioxazin | Reaktivkomponente |
|---|---|---|
| 89 | 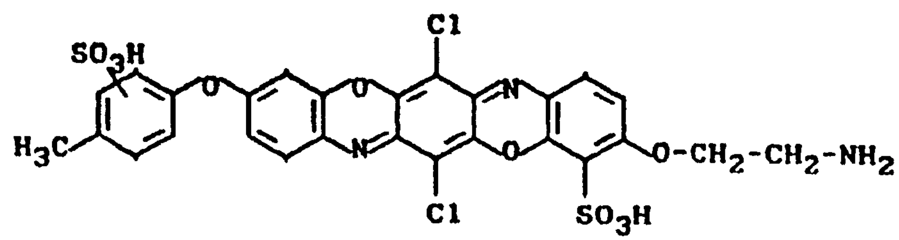 | 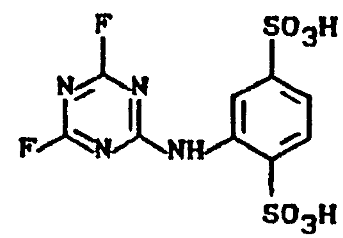 |
| 90 | 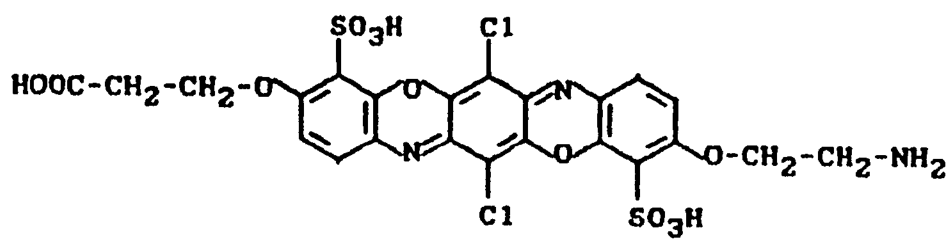 | 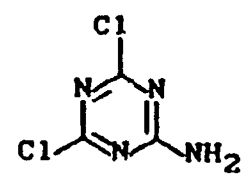 |
| 91 | 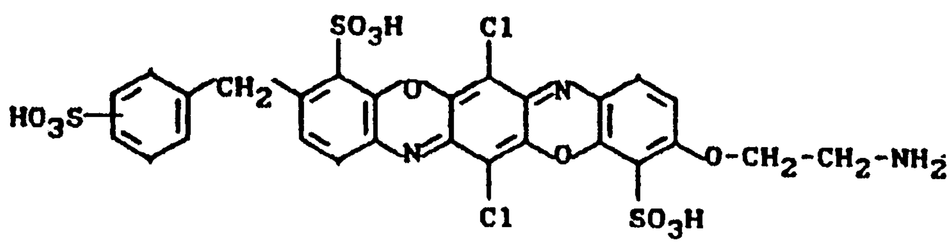 | 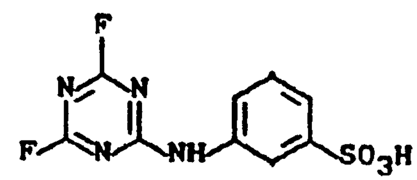 |

**Tabelle I** (Fortsetzung)

| Beispiel | Triphendioxazin | Reaktivkomponente |
|---|---|---|
| 92 | 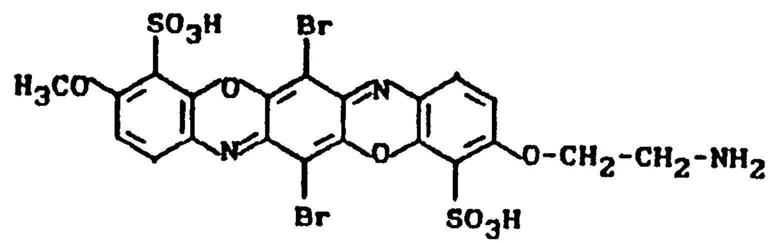 | 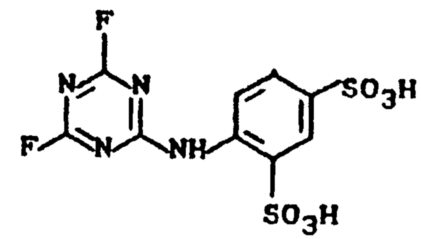 |
| 93 | 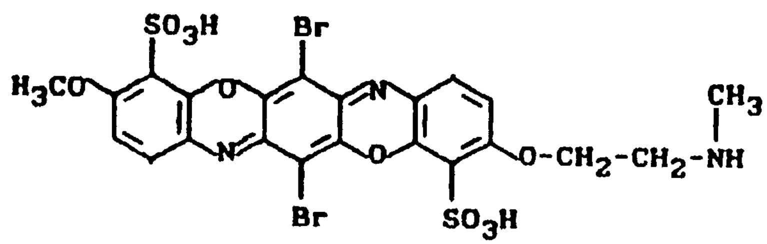 | 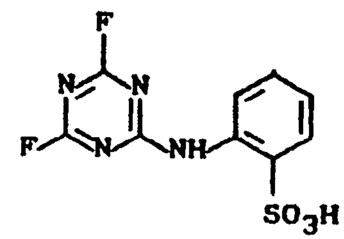 |
| 94 | 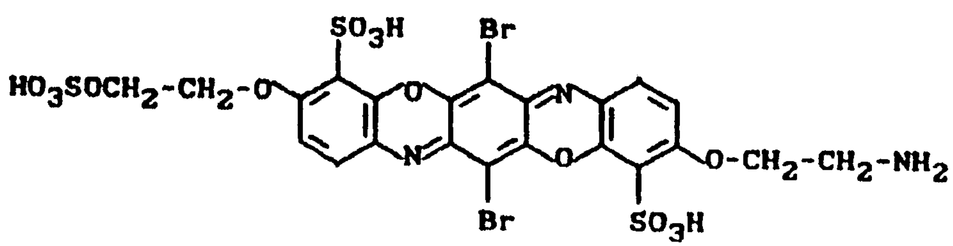 | 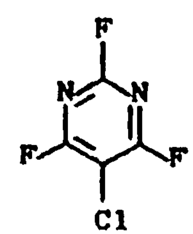 |

**Tabelle I** (Fortsetzung)

| Beispiel | Triphendioxazin | Reaktivkomponente |
|---|---|---|
| 95 | 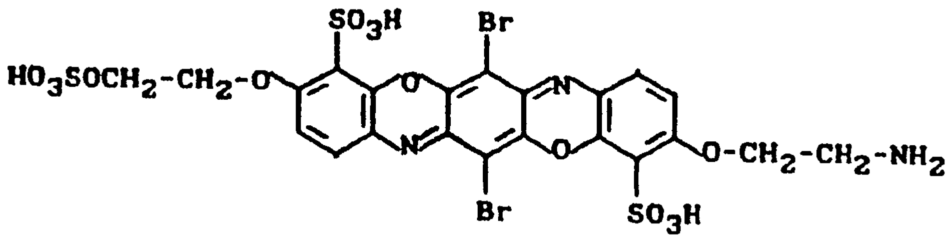 | 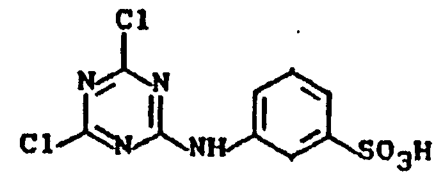 |
| 96 | 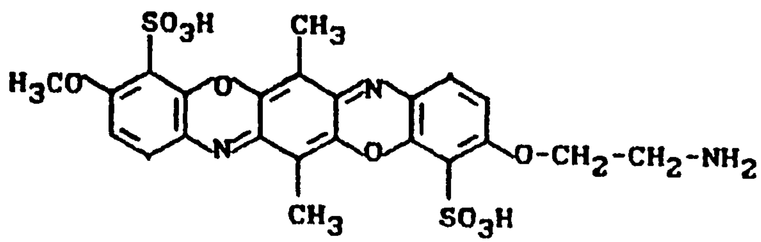 | 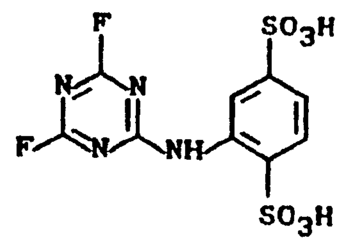 |
| 97 | 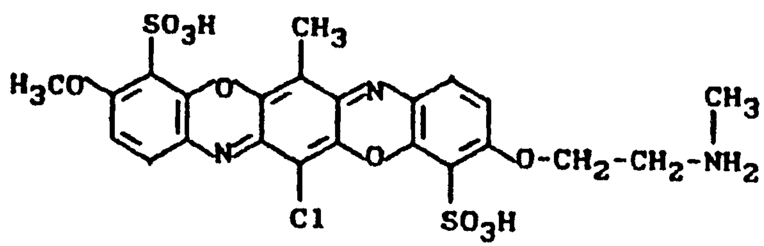 | 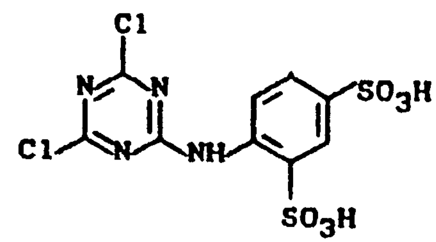 |

**Tabelle I** (Fortsetzung)

| Beispiel | Triphendioxazin | Reaktivkomponente |
| --- | --- | --- |
| 98 | 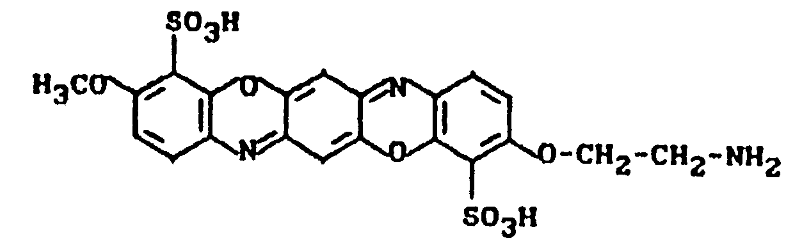 | 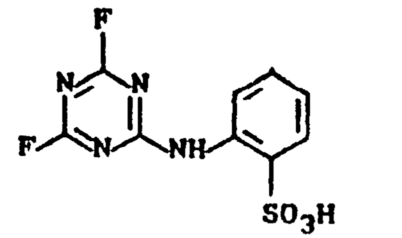 |
| 99 | 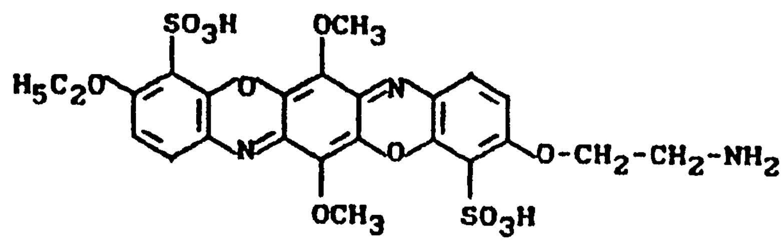 | 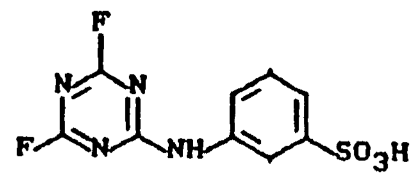 |
| 100 | 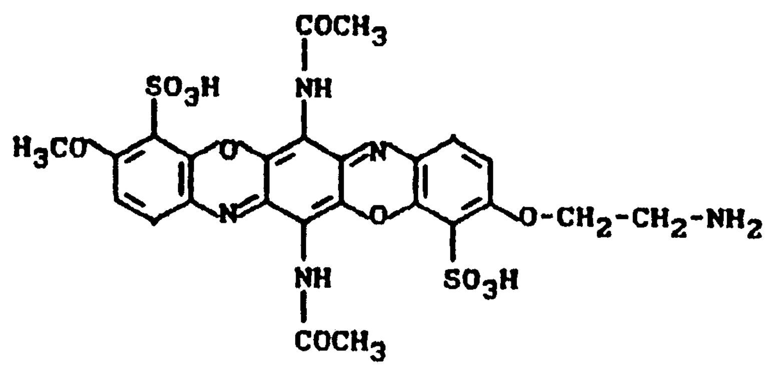 | 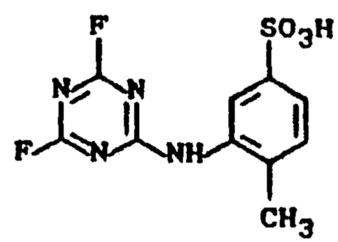 |

**Tabelle I** (Fortsetzung)

| Beispiel | Triphendioxazin | Reaktivkomponente |
| --- | --- | --- |
| 101 | 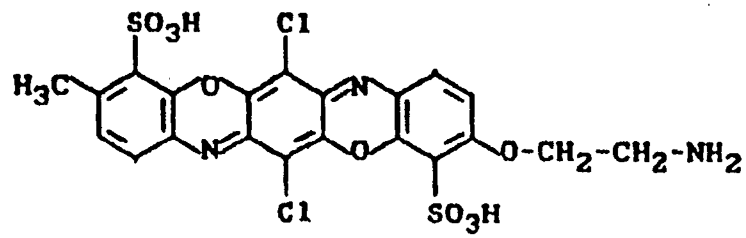 | 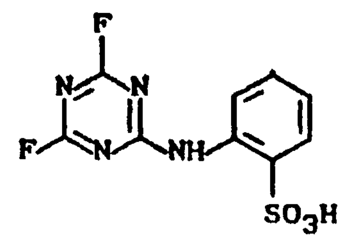 |
| 102 | 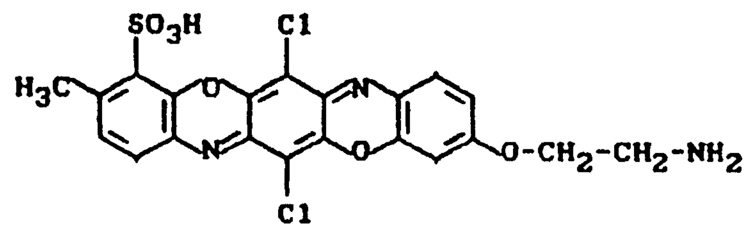 | 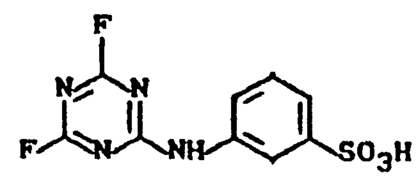 |
| 103 | " | 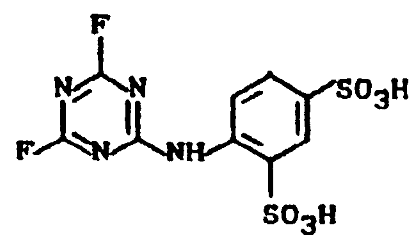 |

**T a b e l l e  I** (Fortsetzung)

| Beispiel | Triphendioxazin | Reaktivkomponente |
| --- | --- | --- |
| 104 | 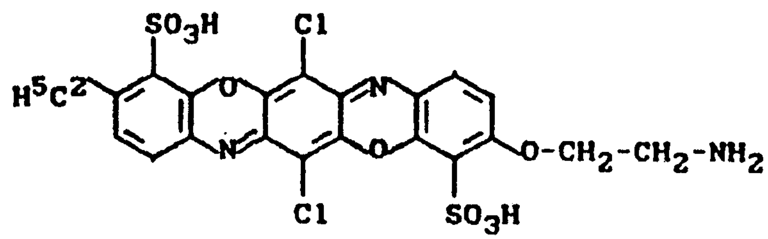 | 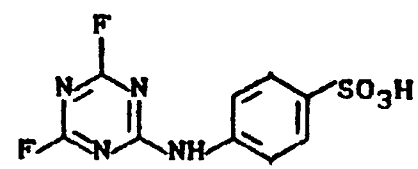 |

Beispiel 105

Setzt man im Beispiel 1 an Stelle der dort angegebenen Aminoverbindungen folgende Mengen mit Chloranil um :

| | |
|---|---|
| 32,3 g | 2-(4-Amino-2-sulfophenoxy)-ethylaminhydrochlorid (0,12 Mole) |
| 16,2 g | 5-Amino-2-methoxybenzolsulfonsäure (0,08 Mole) |
| 24,6 g | Chloranil (0,1 Mole), |

oxydiert das erhaltene Kondensationsprodukt gemäß Beispiel 2 zum Triphendioxazin und läßt 16,5 g des erhaltenen Triphendioxazin-Gemisches mit den in den Beispielen 3-5 genannten Mengen der Difluortriazinylaminobenzolsulfonsäure-Reaktivkomponente in analoger Weise reagieren, so erhält man weitere, Cellulosefasern blaustichig rot färbende Reaktivfarbstoffe, die in ihren Färbe- und Echtheitseigenschaften denen der Beispiele 3-5 nahestehen.

Beispiel 106

Läßt man weiterhin im Beispiel 1 an Stelle der dort angegebenen Ausgangsverbindungen die Aminokomponenten in folgenden Mengenverhältnissen mit Chloranil reagieren :

| | |
|---|---|
| 37,6 g | 2-(4-Amino-2-sulfophenoxy)-ethylamin-hydrochlorid (0,14 Mole) |
| 12,2 g | 5-Amino-2-methoxybenzolsulfonsäure (0,06 Mole) |
| 24,6 g | Chloranil (0,1 Mole), |

wandelt das erhaltene Kondensationsprodukt gemäß Beispiel 2 zum Triphendioxazin-Gemisch um und kondensiert 14,0 g der erhaltenen Farbbase mit den in den Beispielen 3-5 genannten Mengen an Difluortriazinylaminobenzolsulfonsäure-Reaktivkomponenten in analoger Weise, dann erhält man Farbstoffe, die in ihren Färbe- und Echtheitseigenschaften denen der Beispiele 3-5 ähneln.

Beispiel 107

Setzt man im Beispiel 1 an Stelle der dort genannten Mengen Aminoverbindungen die folgenden mit Chloranil um :

| | |
|---|---|
| 41,6 g | 2-(4-Amino-2-sulfophenoxy)-ethylamin-hydrochlorid (0,155 Mole) |
| 9,1 g | 5-Amino-2-methoxybenzolsulfonsäure (0,045 Mole) |
| 24,6 g | Chloranil (0,1 Mole), |

oxydiert das erhaltene Kondensationsprodukt gemäß Beispiel 2 zum Triphendioxazin-Gemisch und setzt 12,5 g des erhaltenen Produktes mit den in den Beispielen 3-5 genannten Mengen an Difluortriazinylaminobenzolsulfonsäure-Reaktivkomponenten um, so lassen sich weitere, Cellulosefasern blaustichig rot färbende Reaktivfarbstoffe mit ähnlichen coloristischen Eigenschaften gewinnen.

Beispiel 108

Setzt man in Beispiel 6 anstelle der dort angegebenen Aminoverbindungen folgende Mengen mit Chloranil um :

| | |
|---|---|
| 37,6 g | 2-(4-Amino-2-sulfophenoxy)-ethylamin-hydrochlorid (0,14 Mole) |
| 15,3 g | Natriumsalz der 5-Amino-2-(β-hydroxyethoxy)-benzolsulfonsäure (0,06 Mole) |
| 24,6 g | Chloranil (0,1 Mole), |

führt das erhaltene Kondensationsprodukt, wie im Beispiel 7 beschrieben, unter gleichzeitiger Sulfatierung der Hydroxygruppe in das entsprechende Triphendioxazin über und setzt 13,5 g des Farbkörpers mit 4,6 ml 2,4,6-Trifluor-5-chlorpyrimidin gemäß den Angaben des Beispiels 8 oder mit den Difluortriazinylaminobenzolsulfonsäure-Komponenten der Beispiele 10 oder 11 (unter Einsatz der dort angegebenen Mengen an Cyanurfluorid und Aminobenzolsulfonsäuren), so erhält man ebenfalls zum Färben von Cellulosefasern sehr gut geeignete, blaustichig rote Farbstoffe hoher Ergiebigkeit.

Beispiel 109

An Stelle der im Beispiel 108 angegebenen Aminoverbindungen setzt man folgende Mengen ein :

| | |
|---|---|
| 33,6 g | 2-(4-Amino-2-sulfoethoxy)-ethylamin-hydrochlorid (0,125 Mole) |
| 19,1 g | Natriumsalz der 5-Amino-2-(β-hydroxyethoxy)-benzolsulfonsäure (0,075 Mole) |
| 24,6 g | Chloranil (0,1 Mole), |

verfährt weiter wie im Beispiel 7 und setzt von dem erhaltenen Triphendioxazin-Farbkörper 15,2 g mit 4,6 ml 2,4,6,-Trifluor-5-chlorpyrimidin gemäß Beispiel 8 oder den in den Beispielen 10-12 angegebenenen Mengen an Difluortriazinylaminobenzolsulfonsäure-Reaktivkomponenten um.

Die auf diese Weise erhaltenen Farbstoffe geben auf Cellulosematerialien licht- und naßechte blaustichig rote Färbungen.

Ähnliche Farbstoffe werden erhalten, wenn man die in der Tabelle II enthaltenen Halogentriazine, gegebenenfalls nach vorheriger Kondensation mit den aufgeführten Aminkomponenten, und die in der letzten Spalte der Tabelle angegebenen Triphendioxazin-Farbbasen in den angegebenem Mengenverhältnis umsetzt.

Tabelle II

| Beispiel Nr. | Halogentriazin | Aminkomponente | Triphendioxazin-Farbbase |
|---|---|---|---|
| 110 | 7,0 g Cyanurfluorid | 11,2 g 4-Aminobenzol-1,3-disulfonsäure | 15,5 g des Beispiels 93 |
| 111 | 7,7 g Cyanurfluorid | 10,5 g 2-Aminobenzol-1,4-disulfonsäure | 15,5 g des Beispiels 93 |
| 112 | 7,7 g Cyanurfluorid | 7,2 g 3-Aminobenzol-sulfonsäure | 13,5 g des Beispiels 94 |
| 113 | 7,7 g Cyanurfluorid | 7,2 g 4-Aminobenzol-sulfonsäure | 13,5 g des Beispiels 94 |
| 114 | 7,7 g Cyanurfluorid | 10,5 g 2-Aminobenzol-1,4-disulfonsäure | 18,2 g des Beispiels 97 |
| 115 | 5,8 g Cyanurfluorid | 8,0 g 3-Amino-4-methyl-benzolsulfonsäure | 18,2 g des Beispiels 97 |
| 116 | 7,6 g 2,4-Dichlor-6-methoxytriazin | - | 18,2 g des Beispiels 97 |
| 117 | 9,5 g 2,4-Dichlor-6-β-methoxyethoxytriazin | - | 18,2 g des Beispiels 97 |
| 118 | 6,4 g Cyanurfluorid | 6,0 g 3-Aminobenzol-sulfonsäure | 12,0 g des Beispiels 96 |

Beispiel 119

26,9 g 2-(4-Amino-2-sulfophenoxy)-ethylamin-hydrochorid (0,1 Mole) und 26,5 g 5-Amino-2-phenoxybenzolsulfonsäure (0,1 Mole) werden in 400 ml Wasser unter Neutralisation mit Natronlauge bei pH 6 gelöst. Man gibt 60 ml Isopropanol hinzu und trägt dann 24,6 g Chloranil (0,1 Mole) ein.

Die Mischung wird auf 40° erwärmt und durch Zutropfen von 2n Sodalösung auf pH 5,8-6,0 gehalten.

Das nach beendeter Umsetzung ausgefallene Kondensationsprodukt wird bei 20° abgesaugt, mit Wasser und Aceton gewaschen und getrocknet. Es entspricht hauptsächlich der Formel

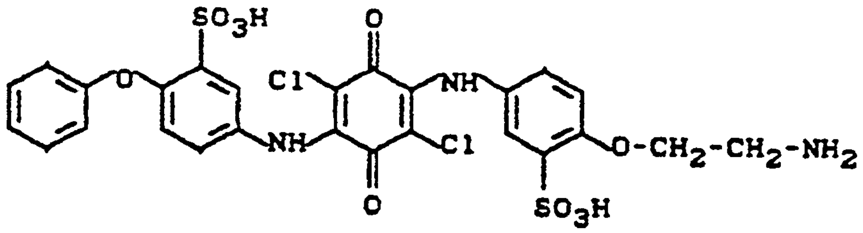

und enthält als Beimengungen die entsprechenden symmetrischen Kondensationsprodukte.

Beispiel 120

25,0 g Dianilid aus Beispiel 119 werden in 70 ml 20%iges Oleum innerhalb von 4 Stunden gleichmäßig eingetragen. Man rührt noch 2 Stunden bei 20-25° nach und trägt dann im Laufe von 45 Minuten 20,1 g Kaliumperoxodisulfat ein, wobei man die Temperatur auf 30-33° hält. Zur Beendigung der Oxidation wird 1 Stunde bei 28-30° nachgerührt und die Lösung anschließend in 550 g Eis eingerührt. Das ausgefallene Produkt wird abgesaugt, durch Waschen mit Isopropanol von Schwefelsäure befreit und bei 50° im Luftstrom getrocknet. Es entspricht überwiegend der Formel

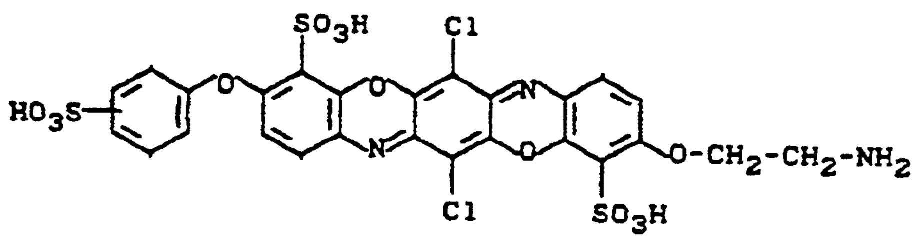

neben 3,10-Bis-(2-aminoethoxy)- und 3,10-Bis-(x-sulfophenoxy)-6,13-dichlor-triphendioxazin-disulfonsäure als Begleitkomponenten.

Beispiel 121

20,0 g Aminoethoxytriphendioxazin-Komponente des Beispiels 120 werden in 350 ml Wasser durch Zugabe von 2n Natronlauge bis zum pH 10,5 gelöst.

6,5 g 3-Aminobenzolsulfonsäure und 3,5 ml Cyanurfluorid werden nach den Angaben des Beispiels 4 zu einer Lösung von 3-(2,4-Difluor-6-triazinyl)-aminobenzolsulfonsäure kondensiert.

Man läßt die beiden Lösungen durch gleichzeitiges Eintragen in 100 ml vorgelegtes Wasser bei 0-5° und pH 8,5-8,7 reagieren rührt noch 3 Stunden unter diesen Bedingungen weiter und läßt dann die Temperatur unter weiterer pH-Kontrolle auf 20° ansteigen. Nach beendeter Reaktion wird der pH-Wert der Lösung mit 0,6 g primärem Natriumphosphat auf 7,0 gestellt und die Lösung im Vakuum bei 30-35° eingedampft.

Der erhaltene Farbstoff entspricht überwiegend der Formel

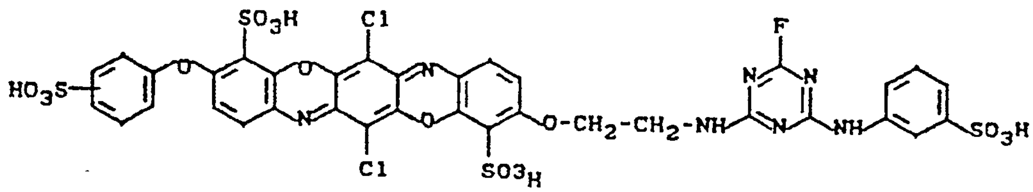

und färbt Cellulosefasern in lichtechten, blaustichig roten Farbtönen.

Beispiel 122

Kondensiert man nach dem Verfahren des Beispiels 1 26,9 g 2-(4-Amino-2-sulfophenoxy)-ethylamin-hydrochlorid (0,1 Mole) und 20,1 g 5-Amino-2,4-dimethylbenzolsulfonsäure (0,1 Mole) mit 24,6 g Chloranil (0,1), so erhält man ein Produkt, das überwiegend der Formel

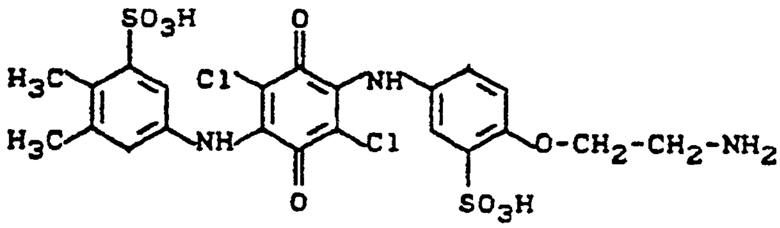

entspricht und in analoger Weise isoliert und getrocknet wird.

20,0 g des obigen Produktes werden in 56 ml 20%iges Oleum eingetragen. Man rührt bei 20° nach, bis alles gelöst ist. 17,9 g Kaliumperoxodisulfat werden in 30-45 Minuten bei einer Temperatur von 35° eingetragen. Nach dem Eintragen hält man die Temperatur noch 1 Stunde bei 32-35°, bis die Oxydation beendet ist. Die erhaltene Lösung wird in 400 g Eis und 100 ml Wasser eingerührt, der Niederschlag abgesaugt und durch Waschen mit Isopropanol von Schwefelsäure befreit. Der Filterkuchen kann bei 50° im Umluftschrank getrocknet werden. Er entspricht der Formel

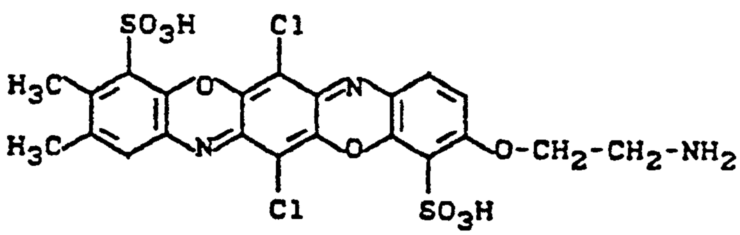

überwiegend und enthält daneben die 3,10-Bis-(2-aminoethoxy)- und die 2,3,9,10-Tetramethyl-6,13-dichlortriphendioxazin-disulfonsäure.

Beispiel 123

18,5 g Aminoalkoxytriphendioxazinkomponente des Beispiels 122 werden in 320 ml Wasser bei pH 10,5 gelöst, 7,8 g 2-Aminobenzolsulfonsäure und 4,4 ml Cyanurfluorid werden gemäß Beispiel 3 zu einer Suspension von 2-(2,4-Difluor-6-triazinylamino)-benzolsulfonsäure kondensiert.

Man trägt nun beide Komponenten in 100 ml vorgelegtes Wasser bei 0-5° zu gleichen Bruchteilen ein und hält in der Reaktionsmischung durch Zudosieren von 2n Natronlauge den pH-Wert auf 8,5-8,7. Nach 2 Stunden läßt man die Temperatur von selbst auf 20° ansteigen und führt bei obigem pH-Wert die Kondensation zu Ende.

Die erhaltene Lösung wird nach Einstellen des pH-Wertes auf 7 mittels primärem Natriumphosphat bei 30-35° im Vakuum eingedampft. Der erhaltene Farbstoff entspricht überwiegend der Formel

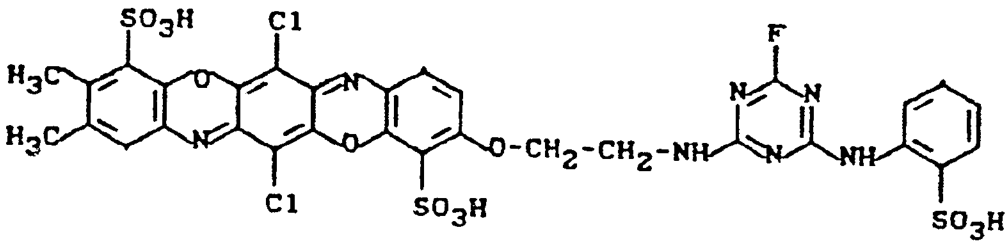

mit bifunktionellem aus der 3,10-Bis-(2-aminoethoxy)-6,13-dichlortriphendioxazin-disulfonsäure entstandenem Reaktivfarbstoff als Nebenbestandteil.

Er färbt Cellulosefasern nach den in der Technik bekannten Applikations- und Fixierverfahren in licht- und naßechten roten Tönen.

## Patentansprüche

1. Farbstoffe der Formel

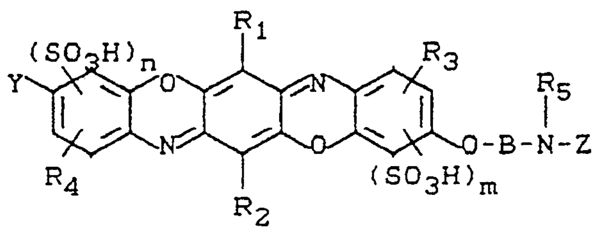

worin

$R_1$, $R_2$ = Wasserstoff, Cl, Br, gegebenenfalls substituiertes $C_1$-$C_4$-Alkyl oder $C_1$-$C_4$-Alkoxy, Carboxy, Alkoxycarbonyl, Aryloxy, gegebenenfalls substituiertes Carbonamid sowie Acylamino.

$R_3$, $R_4$ = Wasserstoff, gegebenenfalls substituiertes $C_1$-$C_4$-Alkyl oder $C_1$-$C_4$-Alkoxy, Carboxy sowie Cl und Br.

$R_5$ = Wasserstoff, gegebenenfalls substituiertes $C_1$-$C_4$-Alkyl, gegebenenfalls substituiertes Aralkyl, gegebenenfalls substituiertes Aryl.

Y = Wasserstoff, Halogen, Sulfo, Amino, $C_1$-$C_6$-Alkoxy, $C_1$-$C_6$-Alkyl, $C_1$-$C_6$-Alkoylamino, $C_1$-$C_6$-Alkylamino, Arylamino, Aryl, Aroylamino, Aralkyl, Aryloxy, wobei Y nicht

$$-O-B-\underset{\displaystyle R_5}{\underset{|}{N}}-Z$$ bedeutet,

wobei die genannten Reste noch weiter substituiert sein können,

B = Brückenglied,
Z = H oder faserreaktiver Rest
m = 0 oder 1
n = 0 oder 1.

2. Farbstoffe des Anspruchs 1 der Formel

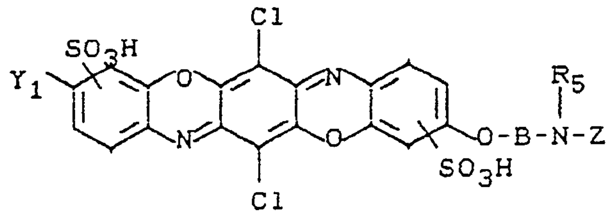

3. Farbstoffe des Anspruchs 1 der Formel

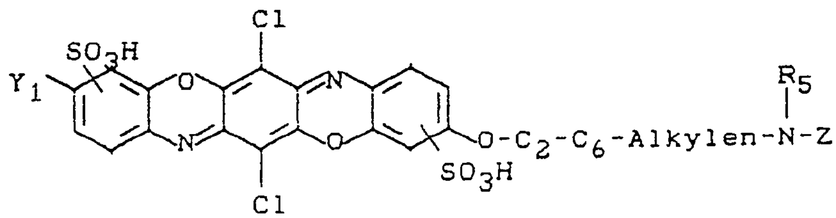

worin

$Y_1$ = gegebenenfalls substituiertes $C_1$-$C_3$-Alkoxy, $C_1$-$C_2$-Alkyl, Phenoxy oder Cl oder Br.

4. Farbstoffe des Anspruchs 3 der Formel

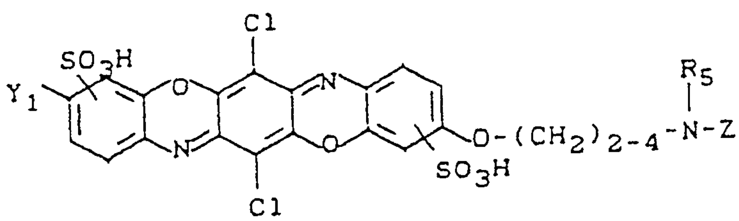

5. Farbstoffe des Anspruchs 1 der Formel

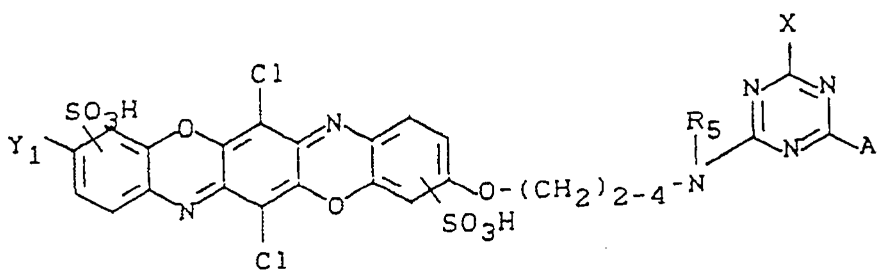

worin

X = F, Cl und
A = Rest eines Aminobenzols oder Aminonaphthalins.

6. Farbstoffe des Anspruchs 5 der Formel

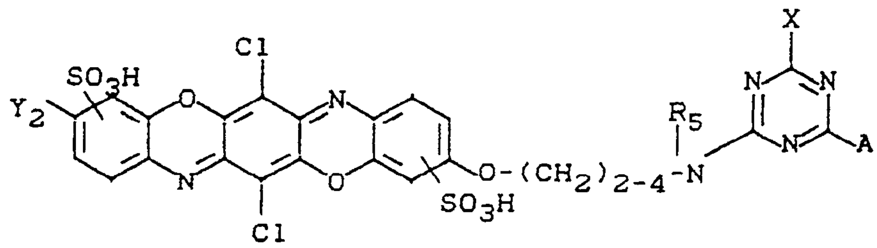

worin

$Y_2$ = $CH_3O$, $C_2H_5O$, $HO_3SO-CH_2-CH_2-O$, 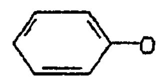 ,

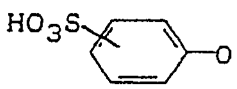 , $CH_3$, Cl.

7. Farbstoffe der Ansprüche 5 und 6 mit

A = 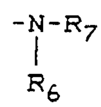

worin

$R_6$ = H, gegebenenfalls substituiertes $C_1$-$C_4$-Alkyl
$R_7$ = gegebenenfalls substituiertes Phenyl oder Naphtyl, insbesondere gegebenenfalls durch $SO_3H$, $C_1$-$C_4$-Alkyl, $C_1$-$C_4$-Alkoxy oder Cl substituiertes Phenyl.

8. Verfahren zur Herstellung der Farbstoffe des Anspruchs 1 mit Z = faserreaktiver Rest, dadurch gekennzeichnet, daß man Farbstoffe der Formel

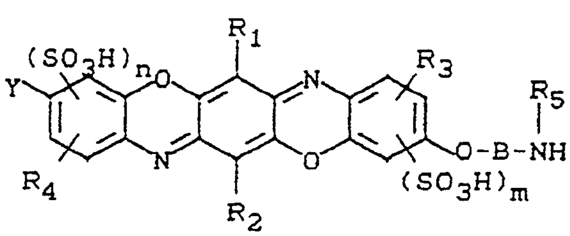

mit einer Reaktivkomponente

Z-Hal

worin
Hal = F, Cl oder Br in an sich bekannter Weise umsetzt.
9. Farbstoffgemisch bestehend aus oder enthaltend Farbstoffe der Formeln

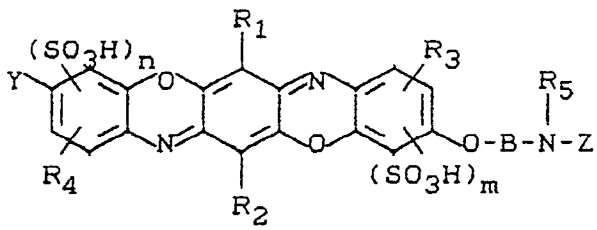

a)

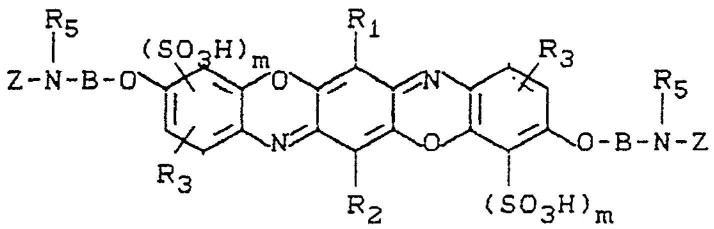

b)

und

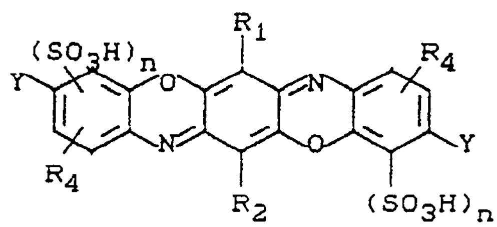

c)

worin

$R_1$-$R_5$ die in Anspruch 1 angegebene Bedeutung haben

Y H oder Substituent, mit Ausnahme von

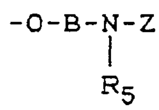

B = Brückenglied

Z = H oder faserreaktiver Rest

m = 0 oder 1

n = 0 oder 1.

10. Farbstoffgemisch gemäß Anspruch 9 bestehend aus oder enthaltend die Farbstoffe a), b) und c) im Molprozent-Verhältnis (19-50) : (80-25) : (1-25), vorsugsweise (30-50) : (4-25) : (66-25).

11. Verwendung der Farbstoffe der Ansprüche 1-7 bsw. der Farbstoffgemische der Ansprüche 9 und 10 zum Färben und Bedrucken OH- oder NH-haltiger Materialien.

## Claims

1. Dyestuffs of the formula

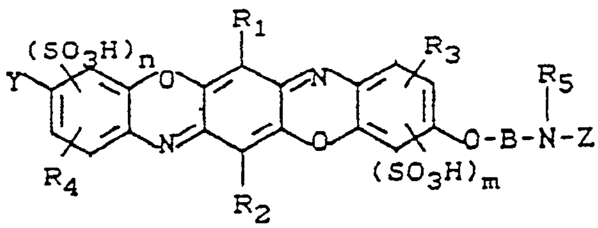

wherein

$R_1$, $R_2$ = hydrogen, Cl, Br, optionally substituted $C_1$-$C_4$-alkyl or $C_1$-$C_4$-alkoxy, carboxyl, alkoxycarbonyl, aryloxy, optionally substituted carboxamide or acylamino.
$R_3$, $R_4$ = hydrogen, optionally substituted $C_1$-$C_4$-alkyl or $C_1$-$C_4$-alkoxy, carboxyl, Cl or Br.
$R_5$ = hydrogen, optionally substituted $C_1$-$C_4$-alkyl, optionally substituted aralkyl, optionally substituted aryl.
Y = hydrogen, halogen, sulpho, amino, $C_1$-$C_6$-alkoxy, $C_1$-$C_6$-alkyl, $C_1$-$C_6$-alkoylamino, $C_1$-$C_6$-alkylamino, arylamino, aryl, aroylamino, aralkyl, aryloxy, where Y does not denote

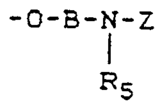

,

it also being possible for the radicals mentioned to be further substituted.

B = a bridging member,
Z = H or a fibre-active radical,
m = 0 or 1 and
n = 0 or 1.

2. Dyestuffs of Claim 1 of the formula

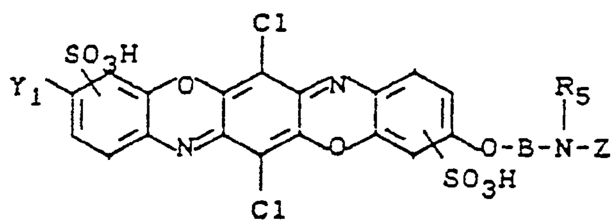

3. Dyestuffs of Claim 1 of the formula

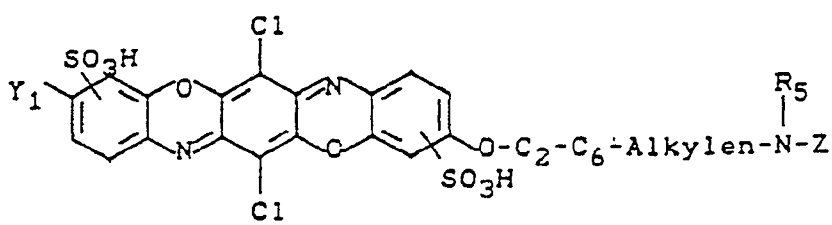

wherein

$Y_1$ = optionally substituted $C_1$-$C_3$-alkoxy, $C_1$-$C_2$-alkyl, phenoxy, Cl or Br.

4. Dyestuffs of Claim 3 of the formula

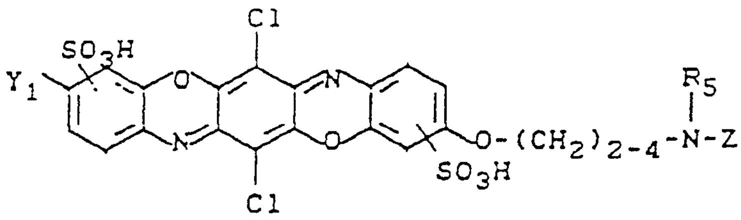

5. Dyestuffs of Claim 1 of the formula

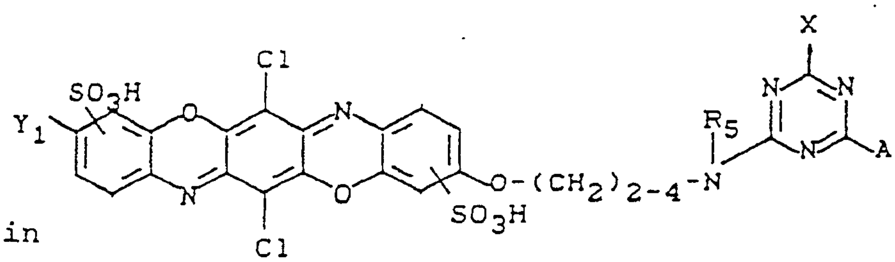

wherein

X = F or Cl and
A = the radical of an aminobenzene or aminonaphthalene.

6. Dyestuffs of Claim 5 of the formula

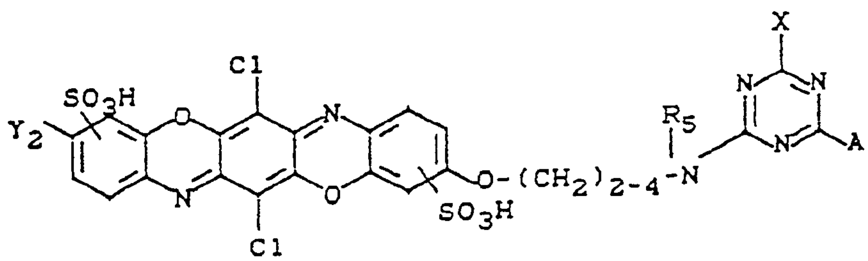

wherein

$Y_2$ = $CH_3O$, $C_2H_5O$, $HO_3SO-CH_2-CH_2-O$, 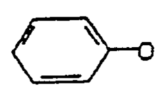 ,

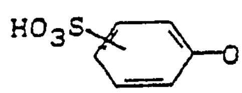 , $CH_3$ or Cl.

7. Dyestuffs of Claims 5 and 6,
wherein

$$A = -\underset{R_6}{N}-R_7$$

wherein

$R_6$ = H or optionally substituted $C_1$-$C_4$-alkyl and
$R_7$ = optionally substituted phenyl or naphthyl, in particular phenyl which is optionally substituted by $SO_3H$, $C_1$-$C_4$-alkyl, $C_1$-$C_4$-alkoxy or Cl.

8. Process for the preparation of the dyestuffs of Claim 1 where Z = a fibre-reactive radical, characterised in that dyestuffs of the formula

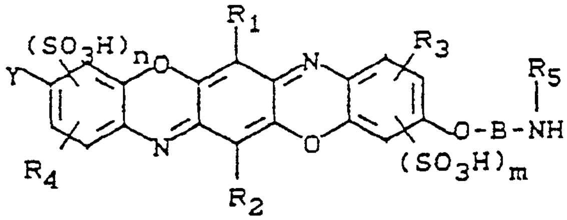

are reacted with a reactive component

Z-Hal

wherein

Hal = F, Cl or Br, in a manner which is known per se.

9. Dyestuff mixture consisting of or containing dyestuffs of the formulae

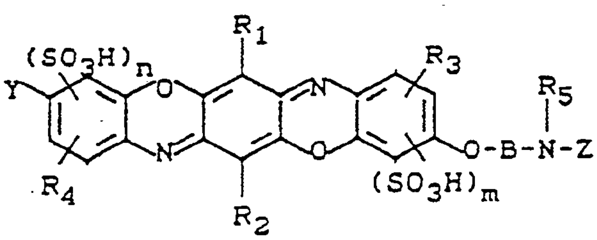

a)

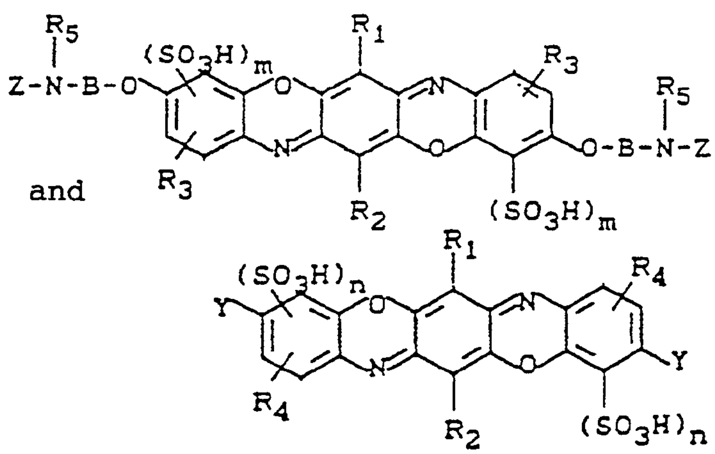

b)

and

c)

wherein

$R_1$-$R_5$ have the meaning given in Claim 1

Y = H or a substituent, with the exception of

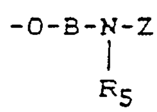

B = a bridging member,

Z = H or a fibre-reactive radical,

m = 0 or 1 and

n = 0 or 1.

10. Dyestuff mixture according to Claim 9 consisting of or containing the dyestuffs a), b) and c) in a molar

per cent ratio of (19-50) : (80-25) : (1-25), preferably (30-50) : (4-25) : (66-25).

11. Use of the dyestuffs of Claims 1-7 or the dyestuff mixtures of Claims 9 and 10 for dyeing and printing OH- or NH-containing materials.

**Revendications**

1. Colorants de formule

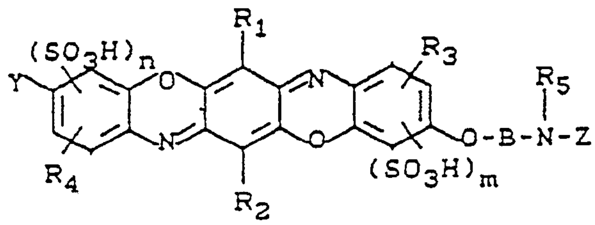

dans laquelle

- $R_1$, $R_2$ représentent chacun un atome d'hydrogène, Cl, Br, un groupe alkyle en $C_1$ à $C_4$ ou alcoxy en $C_1$ à $C_4$ éventuellement substitués, un groupe carboxy, alcoxycarbonyle, aryloxy, carboxamide éventuellement substitué ainsi qu'un groupe acylamino ;
- $R_3$, $R_4$ représentent chacun un atome d'hydrogène, un groupe alkyle en $C_1$ à $C_4$ ou alcoxy en $C_1$ à $C_4$ éventuellement substitués, un groupe carboxy, ainsi que Cl et Br ;
- $R_5$ représente un atome d'hydrogène, un groupe alkyle en $C_1$ à $C_4$ éventuellement substitué, un groupe aralkyle éventuellement substitué, un groupe aryle éventuellement substitué ;
- Y représente un atome d'hydrogène ou d'halogène ou un groupe sulfo, amino, alcoxy en $C_1$ à $C_6$, alkyle en $C_1$ à $C_6$, alcoylamino en $C_1$ à $C_6$, alkylamino en $C_1$ à $C_6$, arylamino, aryle, aroylamino, aralkyle, aryloxy, Y ne représentant pas

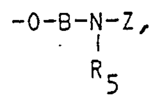

les restes cités pouvant être encore substitués pour leur part,

- B représente un terme de pontage,
- Z représente H ou un reste pouvant réagir avec les fibres,
- m vaut 0 ou 1,
- n vaut 0 ou 1.

2. Colorants selon la revendication 1, de formule

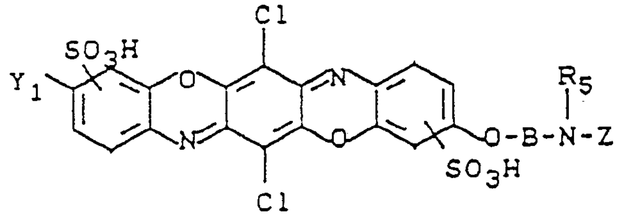

3. Colorants selon la revendication 1, de formule

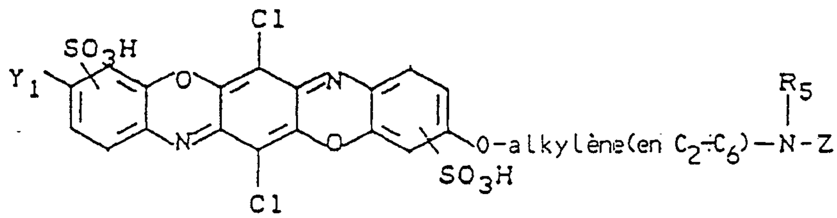

dans laquelle

$Y_1$ représente un groupe alcoxy en $C_1$ à $C_3$ éventuellement substitué, un groupe alkyle en $C_1$ ou $C_2$, phénoxy ou bien Cl ou Br.

4. Colorants selon la revendication 3, de formule

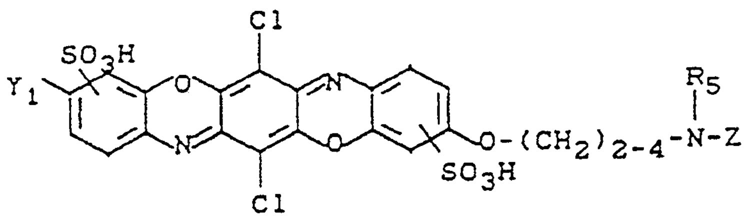

5. Colorants selon la revendication 1, de formule

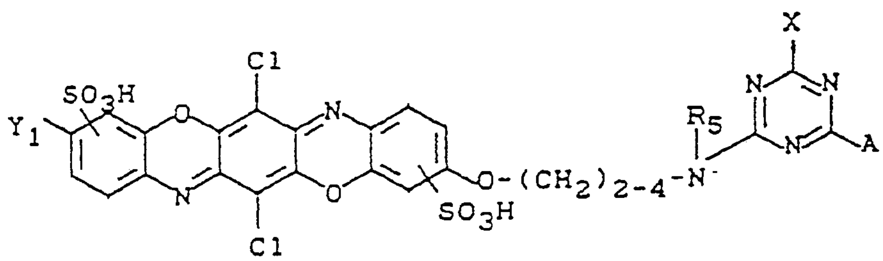

dans laquelle

X représente F, Cl et
A représente le reste d'un aminobenzène ou d'un aminonaphtalène.

6. Colorants selon la revendication 5, de formule

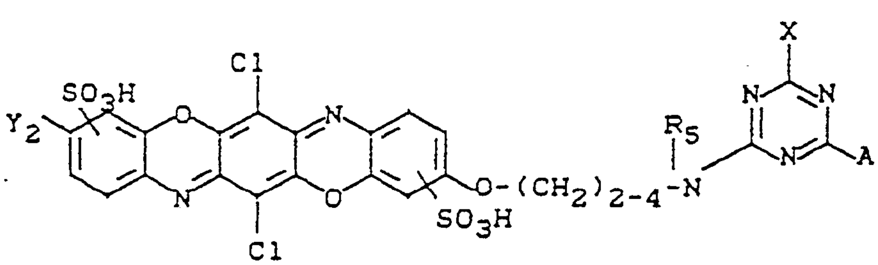

dans laquelle

$Y_2$ représente = $CH_3O$, $C_2H_5O$, $HO_3SO-CH_2-CH_2-O$, 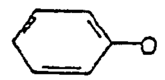,

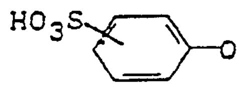 , $CH_3$, Cl.

7. Colorants selon les revendications 5 et 6, dans lesquels

$$A \text{ représente } -\underset{\displaystyle R_6}{\underset{|}{N}}-R_7$$

où

$R_6$ représente H, un groupe alkyle éventuellement substitué,

$R_7$ représente un groupe phényle ou naphtyle éventuellement substitué, en particulier un groupe phényle éventuellement substitué par $SO_3$ H, par un groupe alkyle en $C_1$ à $C_4$, par un groupe alcoxy en $C_1$ à $C_4$ ou par Cl.

8. Procédé pour préparer les colorants selon la revendication 1, dans lesquels Z représente un reste pouvant réagir avec les fibres, caractérisé en ce qu'on fait réagir de façon connue en soi des colorants de formule

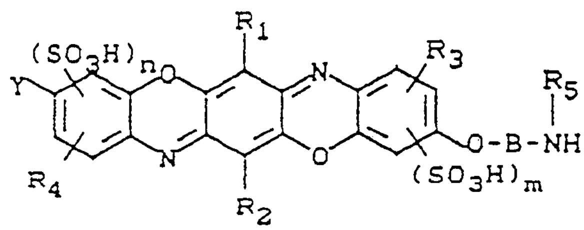

avec un composant réactif Z-Hal, dans lequel

Hal représente F, Cl ou Br.

9. Mélange de colorants consistant en ou contenant des colorants répondant aux formules

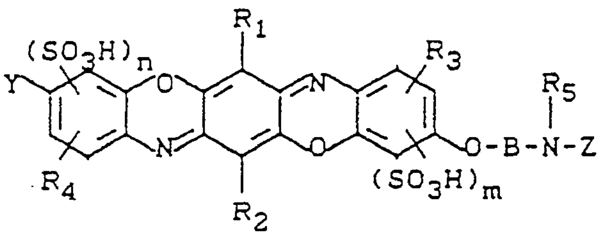

a)

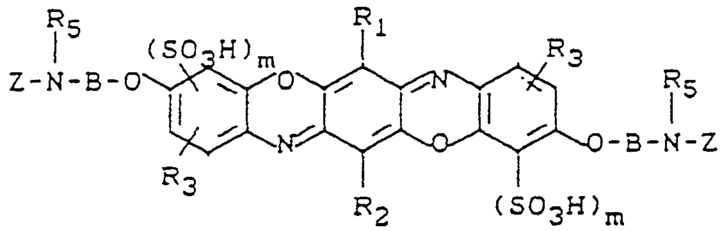

b)

et

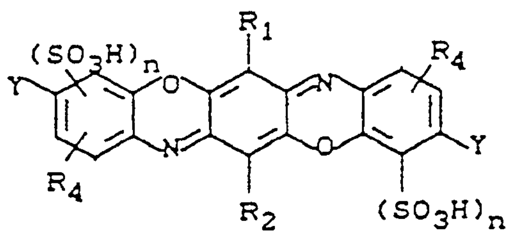

c)

dans lesquelles

$R_1$ à $R_5$ ont le sens indiqué à la revendication 1,

Y représente H ou un substituant, à l'exclusion de

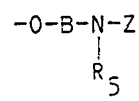

- B représente un terme de pontage,
- Z représente H ou un groupe pouvant réagir avec les fibres,
- m vaut 0 ou 1,
- n vaut 0 ou 1.

10. Mélange de colorants selon la revendication 9, consistant en ou contenant les composés a), b) et c) selon un rapport en pourcentage molaire de (19-50) : (80-25) : (1-25), et avantageusement de (30-50) : (4-25): (66-25).

11. Utilisation des colorants selon les revendications 1 a 7 ou des mélanges de colorants selon les revendications 9 et 10 pour teindre et imprimer des matières contenant des groupes OH ou NH.